# EUROPÄISCHE PATENTSCHRIFT

(11) **EP 3 545 011 B1**
(45) Veröffentlichungstag und Bekanntmachung des Hinweises auf die Patenterteilung: **14.04.2021**
(21) Anmeldenummer: 17808833.2
(22) Anmeldetag: 21.11.2017
(51) Int. Cl.: C08F 220/54, C08F 226/02, C08F 226/10, C11D 3/37, C11D 11/00

(54) **COPOLYMERE UND DEREN VERWENDUNG IN REINIGUNGSMITTEL-ZUSAMMENSETZUNGEN**
COPOLYMERS AND THEIR USE IN DETERGENT COMPOSITIONS
COPOLYMÈRES ET LEUR UTILISATION DANS DES COMPOSITIONS DÉTERGENTES

(30) Priorität: 28.11.2016 DE 102016223588
(43) Veröffentlichungstag der Anmeldung: 02.10.2019
(73) Patentinhaber: Clariant International Ltd, 4132 Muttenz (CH)
(72) Erfinder: BENSON, Hannah, 64625 Bensheim (DE); COHRS, Carsten, 60316 Frankfurt am Main (DE); SAHL, Mike, 65520 Bad Camberg (DE)
(74) Vertreter: Paczkowski, Marcus
(86) Internationale Anmeldenummer: PCT/EP2017/079948
(87) Internationale Veröffentlichungsnummer: WO 2018/095918

(56) Entgegenhaltungen:
- EP-A1- 1 270 624
- EP-A2- 0 467 472
- US-A1- 2010 087 569
- US-A1- 2014 066 547
- US-A1- 2014 213 748
- US-A1- 2014 378 639

## Beschreibung

Die vorliegende Erfindung betrifft Copolymere, die kationische Struktureinheiten und makromonomere Struktureinheiten enthalten, Reinigungsmittel-Zusammensetzungen, die derartige Copolymere enthalten, sowie die Verwendung der Copolymere oder der Reinigungsmittel-Zusammensetzungen, insbesondere zur Glanzerzeugung auf harten Oberflächen, zur Hydrophilisierung harter Oberflächen und zur Erzielung eines Reparatureffektes auf harten Oberflächen.

Kommerzielle Reinigungsformulierungen ermöglichen die effiziente Reinigung von harten Oberflächen der Industrie, des Haushalts oder der Allgemeinheit. Sie bestehen im Allgemeinen aus einer wässrigen Lösung von oberflächenaktiven Mitteln, insbesondere nichtionischen und anionischen oberflächenaktiven Mitteln, Alkohol(en) zur Erleichterung des Trocknens, Basen zur Einstellung des pH-Wertes und gegebenenfalls quaternären Aminen als Desinfektionsmittel.

WO 2013/170001 und WO 2013/170002 beschreiben Reinigerformulierungen, die alkoxylierte polyethlyenimin Polymere enthalten und zur Verbesserung des Glanzes auf harten Oberflächen führen.

WO 2009/156067 beschreibt Reinigerformulierungen, die graft Copolymere von Sacchariden enthalten und zur Verbesserung des Glanzerhaltes von harten Oberflächen verwendet werden können und/oder hydrophilisierende Eigenschaften haben.

WO 2003/031546 beschreibt wässrige antimikrobielle Reiniger-Zusammensetzungen zur Behandlung von harten Oberflächen, mit dem Ergebnis, einen Glanzerhalt oder eine Glanzverbesserung der harten Oberflächen zu erzielen.

WO 98/49263 beschreibt wässrige, saure Oberflächenreiniger, die ein Polymeradditiv enthalten und einen verbesserten Glanz der Oberfläche erzielen.

US 2014/0005095 beschreibt Reiniger-Zusammensetzungen für harte Oberflächen, die eine glänzende, streifenfreie Oberfläche erzielen. US 2014378639 A1 offenbart die Verwendung eines Copolymeren enthaltend 5 bis 45 Gew.% mindestens eines kationischen Monomeren und 50 bis 95 Gew.% eines Makromonomeren in einer Reinigungsmittel-Zusammensetzung. US 2014213748 A1 offenbart die Verwendung eines Copolymeren enthaltend 1 bis 40 Gew.% mindestens eines kationischen Monomeren, 0,01 bis 10 Gew.% eines Makromonomeren und 59,99 bis 98 Gew.% mindestens eines nichtionischen Monomeren in einer Reinigungsmittel-Zusammensetzung.

EP 1196523 B1 beschreibt Reinigungsmittelzusammensetzungen, die zur Behandlung von harten Oberflächen in der Industrie, dem Haushalt oder auch der Allgemeinheit vorgesehen sind und insbesondere darauf abzielen, diesen Oberflächen hydrophile Eigenschaften sowie Schutzeigenschaften zu verleihen.

EP 0467472 A2 offenbart die Verwendung eines Homopolymeren des MDAEM in einer Reinigungsmittel-Zusammensetzung zur Glanzerzeugung, Hydrophilisierung und Erzielung eines Reparatureffektes einer harten Oberfläche aus Keramik oder Porzellan. Obwohl mit den bekannten Systemen bereits gute Ergebnisse erzielt werden können, bleibt doch ein breiter Raum für Verbesserungen. Ein wesentlicher Mangel dieser Reinigungsformulierungen besteht oftmals darin, dass auf der harten Oberfläche nach dem Trocknen Rückstände der Reinigerformulierung in Form von Streifen, Schlieren oder Flecken zu sehen sind und dadurch der Glanz der Oberfläche minimiert wird.

Die Aufgabe der vorliegenden Erfindung lag darin, Polymeradditive zu entwickeln, die wasserlöslich oder wasserdispergierbar sind und Reinigungsmittel-Zusammensetzungen zugesetzt werden können, insbesondere mit dem Resultat, dass nach deren Anwendung auf harten Oberflächen vorteilhafte Glanzeffekte auf den harten Oberflächen zu beobachten sind.

Überraschenderweise wurde gefunden, dass diese Aufgabe gelöst werden kann durch Copolymere enthaltend
a) 0,1 bis 99,4 Mol-%, vorzugsweise 15,0 bis 84,5 Mol-% und besonders bevorzugt 23,0 bis 79,0 Mol-%, einer oder mehrerer kationischer Struktureinheiten (A),
b) 0,4 bis 4,5 Mol-%, vorzugsweise 0,5 bis 4,4 Mol-% und besonders bevorzugt 1,0 bis 4,4 Mol-%, einer oder mehrerer makromonomerer Struktureinheiten (B) und
c) eine oder mehrere Struktureinheiten (C), die sich von den Struktureinheiten (A) und (B) unterscheiden, vorzugsweise 0,1 bis 99,4 Mol-%, besonders bevorzugt 15,0 bis 84,5 Mol-% und insbesondere bevorzugt 20,0 bis 74,0 Mol-%, der einen oder der mehreren Struktureinheiten (C),
wobei die eine oder mehreren Struktureinheiten (A) durch die folgenden allgemeinen Formeln (I) und/oder (II) repräsentiert werden: 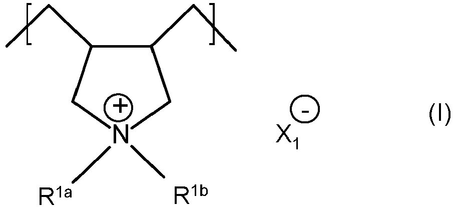 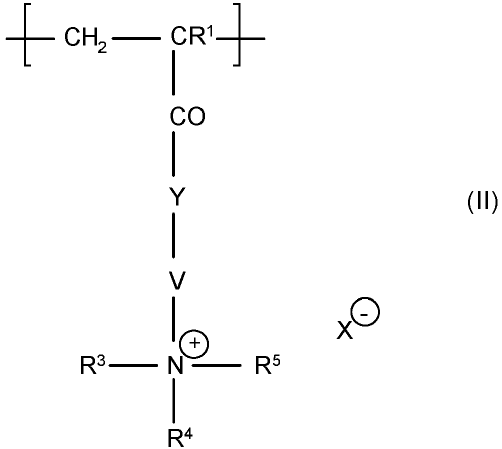 worin
- R¹ und R^{1a}: jeweils gleich oder verschieden sind und unabhängig voneinander jeweils für Wasserstoff und/oder einen Methylrest stehen,
- R^{1b}, R³, R⁴ und R⁵: jeweils gleich oder verschieden sind und unabhängig voneinander jeweils durch Wasserstoff, einen aliphatischen Kohlenwasserstoffrest mit 1 bis 20, vorzugsweise 1 bis 4, C-Atomen, einen cycloaliphatischen Kohlenwasserstoffrest mit 5 bis 20, vorzugsweise 5 bis 8, C-Atomen, einen Arylrest mit 6 bis 14 C-Atomen und/oder Polyethylenglykol (PEG) repräsentiert werden, vorzugsweise jeweils gleich oder verschieden sind und unabhängig voneinander jeweils durch Wasserstoff und/oder Methyl repräsentiert werden und besonders bevorzugt jeweils Methyl bedeuten,
- Y: gleich oder verschieden ist und durch Sauerstoff, NH und/oder NR³ repräsentiert wird,
- V: gleich oder verschieden ist und durch -(CH₂)ₓ-, 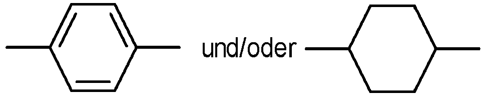 repräsentiert wird,
- x: gleich oder verschieden ist und durch eine ganze Zahl von 1 bis 6 repräsentiert wird,
- X und X₁: jeweils gleich oder verschieden sind und unabhängig voneinander jeweils durch ein Halogenatom, C₁- bis C₄-Alkylsulfat und/oder C₁- bis C₄-Alkylsulfonat repräsentiert werden,
die eine oder die mehreren makromonomeren Struktureinheiten (B) durch die allgemeine Formel (III) repräsentiert werden: 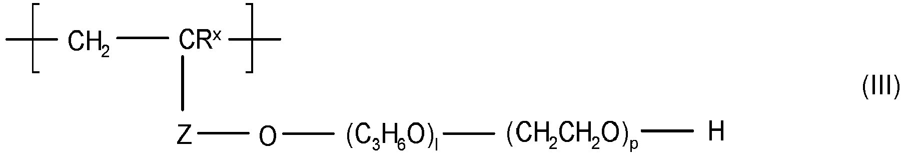 worin
- R^{x}: gleich oder verschieden ist und durch H und/oder Methyl repräsentiert wird,
- Z: gleich oder verschieden ist und durch C=O und/oder O(CH₂)₄ repräsentiert wird und vorzugsweise O(CH₂)₄ ist,
- I: im molaren Mittel, eine Zahl von 0 bis 7 und vorzugsweise von 0 bis 6 ist, und
- p: im molaren Mittel, eine Zahl von 1 bis 150, vorzugsweise von 11 bis 150 und besonders bevorzugt von 12 bis 150 ist,
wobei R^{x} gleich oder verschieden ist und durch H und/oder Methyl repräsentiert wird, I, im molaren Mittel, eine Zahl von 1 bis 7, vorzugsweise von 2 bis 6 und besonders bevorzugt von 3 bis 6 ist, und p, im molaren Mittel, eine Zahl von 1 bis 150, vorzugsweise von 11 bis 150 und besonders bevorzugt von 12 bis 150 ist, wenn Z C=0 bedeutet,
und die eine oder die mehreren Struktureinheiten (C) das Polymerisationsprodukt mindestens einer Monomerspezies ausgewählt aus der Gruppe bestehend aus nicht-kationischen Acrylamiden, nicht-kationischen Methacrylamiden und N-Vinyl-substituierten Lactamen mit 5 bis 7 Ringatomen darstellen.

Gegenstand der vorliegenden Erfindung sind daher Copolymere enthaltend
a) 0,1 bis 99,4 Mol-%, vorzugsweise 15,0 bis 84,5 Mol-% und besonders bevorzugt 23,0 bis 79,0 Mol-%, einer oder mehrerer kationischer Struktureinheiten (A),
b) 0,4 bis 4,5 Mol-%, vorzugsweise 0,5 bis 4,4 Mol-% und besonders bevorzugt 1,0 bis 4,4 Mol-%, einer oder mehrerer makromonomerer Struktureinheiten (B) und
c) eine oder mehrere Struktureinheiten (C), die sich von den Struktureinheiten (A) und (B) unterscheiden, vorzugsweise 0,1 bis 99,4 Mol-%, besonders bevorzugt 15,0 bis 84,5 Mol-% und insbesondere bevorzugt 20,0 bis 74,0 Mol-%, der einen oder der mehreren Struktureinheiten (C),
wobei die eine oder mehreren Struktureinheiten (A) durch die folgenden allgemeinen Formeln (I) und/oder (II) repräsentiert werden: 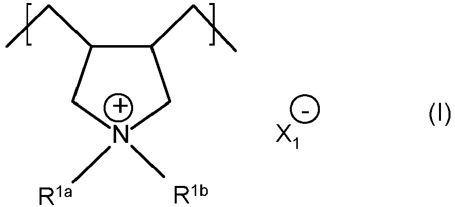 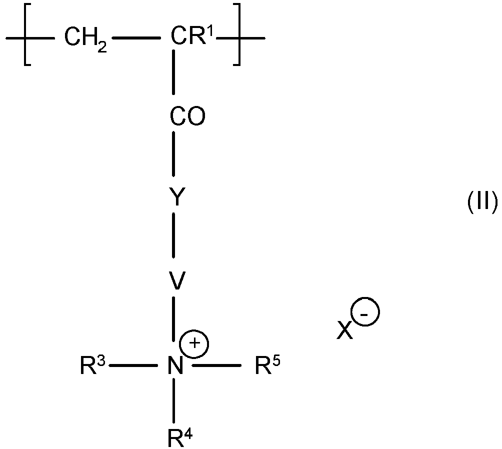 worin
- R¹ und R^{1a}: jeweils gleich oder verschieden sind und unabhängig voneinander jeweils für Wasserstoff und/oder einen Methylrest stehen,
- R^{1b}, R³, R⁴ und R⁵: jeweils gleich oder verschieden sind und unabhängig voneinander jeweils durch Wasserstoff, einen aliphatischen Kohlenwasserstoffrest mit 1 bis 20, vorzugsweise 1 bis 4, C-Atomen, einen cycloaliphatischen Kohlenwasserstoffrest mit 5 bis 20, vorzugsweise 5 bis 8, C-Atomen, einen Arylrest mit 6 bis 14 C-Atomen und/oder Polyethylenglykol (PEG) repräsentiert werden, vorzugsweise jeweils gleich oder verschieden sind und unabhängig voneinander jeweils durch Wasserstoff und/oder Methyl repräsentiert werden und besonders bevorzugt jeweils Methyl bedeuten,
- Y: gleich oder verschieden ist und durch Sauerstoff, NH und/oder NR³ repräsentiert wird,
- V: gleich oder verschieden ist und durch -(CH₂)ₓ-, 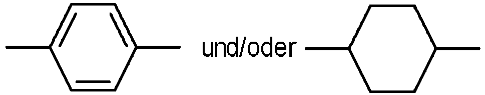 repräsentiert wird,
- x: gleich oder verschieden ist und durch eine ganze Zahl von 1 bis 6 repräsentiert wird,
- X und X₁: jeweils gleich oder verschieden sind und unabhängig voneinander jeweils durch ein Halogenatom, C₁- bis C₄-Alkylsulfat und/oder C₁- bis C₄-Alkylsulfonat repräsentiert werden,
die eine oder die mehreren makromonomeren Struktureinheiten (B) durch die allgemeine Formel (III) repräsentiert werden: 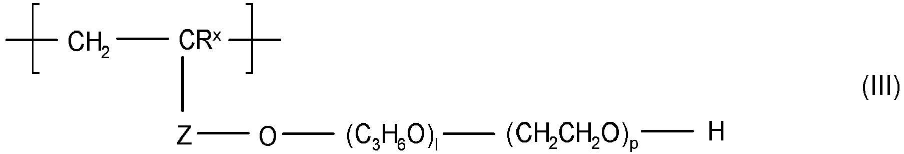 worin
- R^{x}: gleich oder verschieden ist und durch H und/oder Methyl repräsentiert wird,
- Z: gleich oder verschieden ist und durch C=O und/oder O(CH₂)₄ repräsentiert wird und vorzugsweise O(CH₂)₄ ist,
- I: im molaren Mittel, eine Zahl von 0 bis 7 und vorzugsweise von 0 bis 6 ist, und
- p: im molaren Mittel, eine Zahl von 1 bis 150, vorzugsweise von 11 bis 150 und besonders bevorzugt von 12 bis 150 ist,
wobei, wenn Z C=0 bedeutet, R^{x} gleich oder verschieden ist und durch H und/oder Methyl repräsentiert wird, I, im molaren Mittel, eine Zahl von 1 bis 7, vorzugsweise von 2 bis 6 und besonders bevorzugt von 3 bis 6 ist, und p, im molaren Mittel, eine Zahl von 1 bis 150, vorzugsweise von 11 bis 150 und besonders bevorzugt von 12 bis 150 ist,
und die eine oder die mehreren Struktureinheiten (C) das Polymerisationsprodukt mindestens einer Monomerspezies ausgewählt aus der Gruppe bestehend aus nicht-kationischen Acrylamiden, nicht-kationischen Methacrylamiden und N-Vinyl-substituierten Lactamen mit 5 bis 7 Ringatomen darstellen.

Der Begriff "harte Oberfläche" bedeutet im Sinne der Erfindung eine Oberfläche aus formfesten Materialien, z. B. aus Kunststoff, Keramik, Stein wie z. B. Naturstein, Porzellan, Glas, Holz, Linoleum oder Metall wie z. B. Edelstahl, typischerweise Oberflächen im Küchen- und Sanitärbereich, beispielsweise in Küchen, Bädern und Toiletten, im Haushalt, aber auch im industriellen Bereich, beispielsweise in Metzgereien, Schlachthöfen, Molkereien, Lagertanks für Lebensmittel oder Industrieprodukte, sowie im öffentlichen Bereich, wie z. B. Gebäudefassaden, in Schwimmbädern oder in Bahnhöfen.

WO 2012/076365 A1 offenbart kationische Copolymere enthaltend kationische Struktureinheiten und makromonomere Struktureinheiten sowie deren Verwendung als Zusatzmittel für Baustoffsysteme, insbesondere basierend auf Calciumsulfat.

WO 2008/049549 A2 beschreibt hydrophob modifizierte kationische Copolymere, welche mindestens drei verschiedene Struktureinheiten aufweisen und wovon eine Struktureinheit eine terminale Phenylgruppe oder speziell substituierte Phenylgruppe aufweist. Mit Hilfe der Copolymere kann insbesondere in Kombination mit anionischen Tensiden selbst im Falle von hohen Salzfrachten eine erhebliche Verbesserung der Wasserretention in wässrigen Baustoffsystemen auf der Basis von hydraulischen Bindemitteln, wie Zement, erzielt werden.

In WO 2008/141844 A1 werden Dispersionen umfassend anorganische Partikel, Wasser und mindestens ein wasserlösliches Polymer beschrieben. Das mindestens eine wasserlösliche Polymer weist Wiederholungseinheiten, die von Monomeren mit mindestens einer quartären Ammoniumgruppe abgeleitet sind, Wiederholungseinheiten, die von Monomeren mit mindestens einer Carboxygruppe abgeleitet sind, und Wiederholungseinheiten, die von Polyalkoxyalkylengruppen-haltigen Estermonomeren mit einem Zahlenmittel des Molekulargewichts im Bereich von 3000 g/mol bis 10 000 g/mol abgeleitet sind, auf. Die Dispersionen können insbesondere zur Herstellung von Beton eingesetzt werden und können über einen sehr langen Zeitraum verarbeitet werden.

WO 2008/046652 A1 beschreibt Propfpolymere erhältlich durch Copolymerisation von zumindest einem spezifischen Makromonomer und zumindest einem weiteren Monomer, welches eine polymerisierbare ethylenisch ungesättigte Doppelbindung aufweist sowie deren Verwendung als Dispergiermittel, beispielsweise in Pigmentkonzentraten.

In der US 2011/0144264 A1 wird die Verwendung von Substanzen wie z. B. Polyethylenglykol- oder Poly(ethylen-co-propylen)glykol-(meth)acrylsäureestern, die während des Prozesses einer Latexherstellung durch Emulsionspolymerisation mindestens eines polymerisierbaren Monomers zur Stabilisierung beitragen können, beschrieben.

In JP 2008-056711 A werden Copolymere mit einem zahlenmittleren Molekulargewicht von 5000 bis 1 000 000 offenbart, die Struktureinheiten enthalten, die durch Polymerisation von bestimmten kationischen Monomeren, Polyoxyalkylen-modifizierten Monomeren und vernetzbaren Monomeren gebildet werden und die zusätzlich weitere Struktureinheiten enthalten können, die durch Polymerisation von weiteren Monomeren, die mit den zuvor genannten Monomeren copolymerisiert werden können, gebildet werden. Die Copolymere können z. B. als antistatische Mittel für thermoplastische Polymere verwendet werden.

Ein Vorteil der Erfindung ist, dass die erfindungsgemäßen Copolymere Reinigungsmittel-Zusammensetzungen zugesetzt werden können, und diese bei Anwendung auf einer harten Oberfläche einen vorteilhaften Reinigungseffekt bewirken können.

Ein weiterer Vorteil der Erfindung ist, dass die erfindungsgemäßen Copolymere Reinigungsmittel-Zusammensetzungen zugesetzt werden können, und dadurch einen Glanzeffekt auf der harten Oberfläche, auf der sie angewendet wurden, hervorrufen.

Ein weiterer Vorteil der Erfindung ist, dass die erfindungsgemäßen Copolymere Reinigungsmittel-Zusammensetzungen zugesetzt werden können, und der harten Oberfläche, auf der sie angewendet wurden, hydrophile Eigenschaften verleihen. Der Kontaktwinkel zwischen der behandelten Oberfläche und einem Wassertropfen oder einem Tropfen einer wässrigen Reinigungsmittel-Zusammensetzung kann verringert werden. Die Anwesenheit von Spuren oder Flecken, die auf den harten Oberflächen durch Wasser oder wässrige Reinigungsmittel-Zusammensetzungen zurückgelassen werden, die mit ihnen in Kontakt gekommen sind, steht mit dem Phänomen des Zusammenziehens der Wassertropfen oder Tropfen wässriger Reinigungsmittel-Zusammensetzungen bei Kontakt mit der harten Oberfläche in Zusammenhang, die bei der späteren Trocknung auf der Oberfläche Spuren hinterlassen. Zudem kann durch die Verringerung des Kontaktwinkels zwischen der behandelten Oberfläche und einem Wassertropfen die Geschwindigkeit der Trocknung einer Oberfläche verbessert werden.

Auf der harten Oberfläche, auf der die erfindungsgemäßen Copolymere oder die sie enthaltenden Reinigungsmittel-Zusammensetzungen angewendet wurden, können zudem in vorteilhafter Weise Reparatureffekte erzielt werden.

Die Anwendung der erfindungsgemäßen Copolymere oder der sie enthaltenden Reinigungsmittel-Zusammensetzungen kann so erfolgen, dass sie nach dem Auftrag auf der harten Oberfläche verbleiben ("leave on"-Anwendung) oder von ihr entfernt werden und vorzugsweise mit Wasser abgespült werden ("rinse off"-Anwendung).

Die Anwendung der erfindungsgemäßen Copolymere oder der sie enthaltenden Reinigungsmittel-Zusammensetzungen kann z. B. in vorteilhafter Weise auf harten Oberflächen in Badezimmern oder in Küchen, auf Fußböden oder an Toiletten stattfinden.

Vorzugsweise stellt die eine oder stellen die mehreren Struktureinheiten (A) der erfindungsgemäßen Copolymere das Polymerisationsprodukt mindestens einer Monomerspezies ausgewählt aus der Gruppe bestehend aus [2-(Acryloyloxy)-ethyl]-trimethylammoniumchlorid, [2-(Acryloylamino)-ethyl]-trimethylammoniumchlorid, [2-(Acryloyloxy)-ethyl]-trimethylammoniummethosulfat, [2-(Methacryloyloxy)-ethyl]-trimethylammonium-chlorid bzw. -methosulfat, [3-(Acryloylamino)-propyl]-trimethylammoniumchlorid, [3-(Methacryloylamino)-propyl]-trimethylammoniumchlorid und Diallyldimethylammoniumchlorid (DADMAC) dar, besonders bevorzug stellt die eine oder stellen die mehreren Struktureinheiten (A) der erfindungsgemäßen Copolymere das Polymerisationsprodukt mindestens einer Monomerspezies ausgewählt aus der Gruppe bestehend aus [3-(Acryloylamino)-propyl]-trimethylammoniumchlorid, [3-(Methacryloylamino)-propyl]-trimethylammoniumchlorid und Diallyldimethylammoniumchlorid dar und insbesondere bevorzugt stellt die eine oder stellen die mehreren Struktureinheiten (A) der erfindungsgemäßen Copolymere das Polymerisationsprodukt mindestens einer Monomerspezies ausgewählt aus der Gruppe bestehend aus [3-(Methacryloylamino)-propyl]-trimethylammoniumchlorid und Diallyldimethylammoniumchlorid, dar.

Vorzugsweise stellt die eine oder stellen die mehreren makromonomeren Struktureinheiten (B) der Formel (III) der erfindungsgemäßen Copolymere das Polymerisationsprodukt mindestens einer Monomerspezies ausgewählt aus der Gruppe bestehend aus Polyethylenglykol-vinyloxy-butylether, Polyethylenglykol-co-polypropylenglykol-vinyloxybutylether (worin I, im molaren Mittel, eine Zahl von 1 bis 7, vorzugsweise von 2 bis 6 und besonders bevorzugt von 3 bis 6, bedeutet), und Polyethylenglykol-co-polypropylenglykol-(meth)acrylat (worin I, im molaren Mittel, eine Zahl von 1 bis 7, vorzugsweise von 2 bis 6 und besonders bevorzugt von 3 bis 6, bedeutet) dar.

Im Rahmen der vorliegenden Erfindung umfasst der Ausdruck "(meth)acrylat" sowohl die entsprechende Acrylat-Verbindung als auch die entsprechende Methacrylat-Verbindung.

Besonders bevorzugt ist in der einen oder den mehreren makromonomeren Struktureinheiten (B) der Formel (III) der erfindungsgemäßen Copolymere
i) R^{x} H, I = 0 und p, im molaren Mittel, eine Zahl von 1 bis 150, vorzugsweise von 11 bis 150 und besonders bevorzugt von 12 bis 150, wenn Z O(CH₂)₄ bedeutet.

Die erfindungsgemäßen Copolymere enthalten eine oder mehrere Struktureinheiten (C), die sich von den Struktureinheiten (A) und (B) unterscheiden, und vorzugsweise 0,1 bis 99,4 Mol-%, besonders bevorzugt 15,0 bis 84,5 Mol-% und insbesondere bevorzugt 20,0 bis 74,0 Mol-%, der einen oder der mehreren Struktureinheiten (C).

In einer hierunter bevorzugten Ausführungsform der Erfindung enthalten die erfindungsgemäßen Copolymere eine oder mehrere Struktureinheiten (C), die sich von den Struktureinheiten (A) und (B) unterscheiden und wobei das eine oder die mehreren Copolymere
vorzugsweise 0,1 bis 99,4 Mol-% der einen oder der mehreren kationischen Struktureinheiten (A), 0,4 bis 4,5 Mol-% der einen oder der mehreren makromonomeren Struktureinheiten (B) und 0,1 bis 99,4 Mol-% der einen oder der mehreren Struktureinheiten (C) enthalten,
besonders bevorzugt 15,0 bis 84,5 Mol-% der einen oder der mehreren kationischen Struktureinheiten (A), 0,5 bis 4,4 Mol-% der einen oder der mehreren makromonomeren Struktureinheiten (B), und 15,0 bis 84,5 Mol-% der einen oder der mehreren Struktureinheiten (C) enthalten, und
insbesondere bevorzugt 23,0 bis 79,0 Mol-% der einen oder der mehreren kationischen Struktureinheiten (A), 1,0 bis 4,4 Mol-% der einen oder der mehreren makromonomeren Struktureinheiten (B) und 20,0 bis 74,0 Mol-% der einen oder der mehreren Struktureinheiten (C) enthalten.

Besonders bevorzugt enthalten die erfindungsgemäßen Copolymere die eine oder die mehreren kationischen Struktureinheiten (A) in Anteilen von 23,0 bis 79,0 Mol-%, die eine oder die mehreren makromonomeren Struktureinheiten (B) in Anteilen von 0,4 bis 4,4 Mol-%, vorzugsweise 0,5 bis 4,4 Mol-% und besonders bevorzugt 1,0 bis 4,4 Mol-%, und die eine oder die mehreren Struktureinheiten (C) in Anteilen von 20,0 bis 74,0 Mol-%.

Die eine oder die mehreren Struktureinheiten (C) der erfindungsgemäßen Copolymere stellen das Polymerisationsprodukt mindestens einer Monomerspezies ausgewählt aus der Gruppe bestehend aus nicht-kationischen Acrylamiden, nicht-kationischen Methacrylamiden und N-Vinyl-substituierten Lactamen mit 5 bis 7 Ringatomen dar.

Besonders bevorzugt ist die eine oder sind die mehreren Struktureinheiten (C) der erfindungsgemäßen Copolymere ausgewählt aus der Gruppe bestehend aus dem Polymerisationsprodukt mindestens eines N-Vinyl-substituierten Lactams mit 5 bis 7 Ringatomen und den Struktureinheiten der folgenden allgemeinen Formeln (IV) und/oder (V): 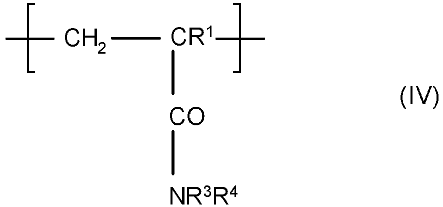 worin
- R¹: gleich oder verschieden ist und Wasserstoff und/oder Methyl bedeutet, und
- R³ und R⁴: jeweils gleich oder verschieden sind und unabhängig voneinander jeweils durch Wasserstoff, einen aliphatischen Kohlenwasserstoffrest mit 1 bis 20, vorzugsweise 1 bis 4, C-Atomen, einen cycloaliphatischen Kohlenwasserstoffrest mit 5 bis 20, vorzugsweise 5 bis 8, C-Atomen, einen Arylrest mit 6 bis 14 C-Atomen, einen Alkylarylrest mit 7 bis 14 C-Atomen, eine verzweigte oder unverzweigte C₁-C₅-Monohydroxyalkylgruppe und/oder Polyethylenglykol (PEG) repräsentiert werden 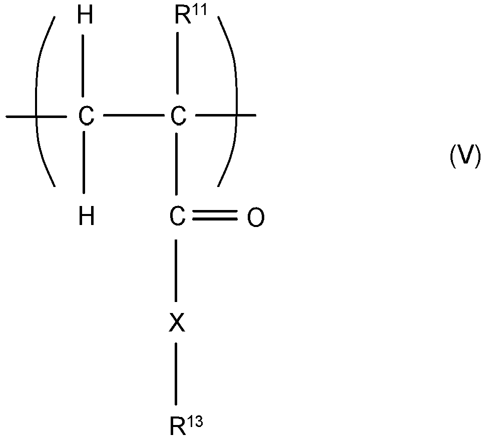
worin
- R¹¹: gleich oder verschieden ist und repräsentiert wird durch H und/oder Methyl;
- X: gleich oder verschieden ist und repräsentiert wird durch NH-(CₙH₂ₙ) mit n = 1, 2, 3 oder 4; und
- R¹³: gleich oder verschieden ist und repräsentiert wird durch OH, SO₃H, PO₃H₂, O-PO₃H₂ und/oder para-substituiertes C₆H₄-SO₃H.

Unter dem Polymerisationsprodukt ausgewählt aus N-Vinyl-substituierten Lactamen mit 5 bis 7 Ringatomen ist das Polymerisationsprodukt von N-Vinylpyrrolidon bevorzugt.

Die Gruppen SO₃H, PO₃H₂, O-PO₃H₂ und para-substituiertes C₆H₄-SO₃H in den Struktureinheiten der Formel (V) können auch in Salzform vorliegen, vorzugsweise als NH₄⁺-, Alkali- oder Erdalkali-Salz und besonders bevorzugt als NH₄⁺- oder als Na⁺-Salz.

Unter den Struktureinheiten der Formel (V), in denen R¹³ N(CH₃)₂ ist, sind diejenigen Struktureinheiten bevorzugt, welche das Polymerisationsprodukt mindestens einer Monomerspezies ausgewählt aus der Gruppe bestehend aus [3-(Methacryloylamino)-propyl]-dimethylamin (R¹¹ = Methyl; X = NH-(CₙH₂ₙ) mit n = 3 und R¹³ = N(CH₃)₂) und [3-(Acryloylamino)-propyl]-dimethylamin (R¹¹ = H; X = NH-(CₙH₂ₙ) mit n = 3 und R¹³ = N(CH₃)₂) darstellen.

Unter den Struktureinheiten der Formel (V) sind diejenigen bevorzugt, welche das Polymerisationsprodukt mindestens einer Monomerspezies ausgewählt aus der Gruppe bestehend aus [3-(Acryloylamino)-propyl]-dimethylamin, [3-(Methacryloylamino)-propyl]-dimethylamin, 2-Acryloylamino-2-methylpropansulfonsäure und den Salzen der 2-Acryloylamino-2-methylpropansulfonsäure darstellen und besonders bevorzugt diejenigen, welche das Polymerisationsprodukt mindestens einer Monomerspezies ausgewählt aus der Gruppe bestehend aus 2-Acryloylamino-2-methylpropansulfonsäure und den Salzen der 2-Acryloylamino-2-methylpropansulfonsäure darstellen.

Insbesondere bevorzugt ist die eine oder sind die mehreren Struktureinheiten (C) der erfindungsgemäßen Copolymere ausgewählt aus den Struktureinheiten der Formel (IV).

Außerordentlich bevorzugt stellt die die eine oder stellen die mehreren Struktureinheiten (C) der erfindungsgemäßen Copolymere das Polymerisationsprodukt mindestens einer Monomerspezies ausgewählt aus der Gruppe bestehend aus Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-Isopropylacrylamid und N-tertiär Butylacrylamid dar und ganz besonders bevorzugt stellt die die eine oder stellen die mehreren Struktureinheiten (C) der erfindungsgemäßen Copolymere das Polymerisationsprodukt mindestens einer Monomerspezies ausgewählt aus der Gruppe bestehend aus N,N-Dimethylacrylamid und N-Isopropylacrylamid dar.

In einer bevorzugten Ausführungsform der Erfindung enthalten die erfindungsgemäßen Copolymere Struktureinheiten (A), (B) und (C) als wiederkehrende Struktureinheiten, aber darüber hinaus keine weiteren wiederkehrenden Struktureinheiten.

In einer hierunter bevorzugten Ausführungsform der Erfindung bestehen die wiederkehrenden Struktureinheiten der erfindungsgemäßen Copolymere aus: 4,0 bis 90,0 Mol-%, vorzugsweise 15,0 bis 83,5 Mol-% und besonders bevorzugt 23,0 bis 78,0 Mol-%, einer oder mehrerer kationischer Struktureinheiten (A), die das Polymerisationsprodukt mindestens einer Monomerspezies ausgewählt aus der Gruppe bestehend aus [3-(Acryloylamino)-propyl]-trimethylammoniumchlorid, [3-(Methacryloylamino)-propyl]-trimethylammoniumchlorid und Diallyldimethylammoniumchlorid und vorzugsweise das Polymerisationsprodukt mindestens einer Monomerspezies ausgewählt aus der Gruppe bestehend aus [3-(Methacryloylamino)-propyl]-trimethylammoniumchlorid und Diallyldimethylammoniumchlorid, darstellen,
1,0 bis 4,5 Mol-%, vorzugsweise 1,5 bis 4,5 Mol-% und besonders bevorzugt 2,0 bis 4,4 Mol-%, einer oder mehrerer makromonomerer Struktureinheiten (B) der allgemeinen Formel (III), worin R^{x} gleich oder verschieden ist und durch H und/oder Methyl repräsentiert wird, Z C=O ist, I, im molaren Mittel, eine Zahl von 1 bis 7, vorzugsweise von 2 bis 6 und besonders bevorzugt von 3 bis 6 ist, und p, im molaren Mittel, eine Zahl von 1 bis 150, vorzugsweise von 11 bis 150 und besonders bevorzugt von 12 bis 150 ist, oder R^{x} H ist, Z O(CH₂)₄ bedeutet, I = 0 ist und p, im molaren Mittel, eine Zahl von 1 bis 150, vorzugsweise von 11 bis 150 und besonders bevorzugt von 22 bis 150 ist, und vorzugsweise einer oder mehrerer makromonomerer Struktureinheiten (B) der allgemeinen Formel (III), worin R^{x} H ist, Z O(CH₂)₄ bedeutet, I = 0 ist und p, im molaren Mittel, eine Zahl von 1 bis 150, vorzugsweise von 11 bis 150 und besonders bevorzugt von 22 bis 150 ist, und
9,0 bis 95,0 Mol-%, vorzugsweise 15,0 bis 80,5 Mol-% und besonders bevorzugt 20,0 bis 73,0 Mol-%, einer oder mehrerer Struktureinheiten (C), die das Polymerisationsprodukt mindestens einer Monomerspezies ausgewählt aus der Gruppe bestehend aus N-Vinylpyrrolidon, N,N-Dimethylacrylamid und N-Isopropylacrylamid darstellen und vorzugsweise das Polymerisationsprodukt mindestens einer Monomerspezies ausgewählt aus der Gruppe bestehend aus N,N-Dimethylacrylamid und N-Isopropylacrylamid darstellen.

In einer weiteren bevorzugten Ausführungsform der Erfindung enthalten die erfindungsgemäßen Copolymere zusätzlich zu den Struktureinheiten (A), (B) und (C) eine oder mehrere Struktureinheiten (D), die sich von den Struktureinheiten (A), (B) und (C) unterscheiden, und vorzugsweise 0,1 bis 99,4 Mol-%, besonders bevorzugt 0,1 bis 40,0 Mol-% und insbesondere bevorzugt 0,1 bis 30,0 Mol-%, der einen oder mehreren Struktureinheiten (D).

In einer besonders bevorzugten Ausführungsform der Erfindung enthalten die erfindungsgemäßen Copolymere zusätzlich zu den Struktureinheiten (A), (B) und (C) eine oder mehrere Struktureinheiten (D), die sich von den Struktureinheiten (A), (B) und (C) unterscheiden und wobei das eine oder die mehreren Copolymere vorzugsweise 0,1 bis 99,4 Mol-% der einen oder der mehreren Struktureinheiten (A), 0,4 bis 4,5 Mol-% der einen oder der mehreren Struktureinheiten (B), 0,1 bis 99,4 Mol-% der einen oder der mehreren Struktureinheiten (C) und 0,1 bis 99,4 Mol-% der einen oder der mehreren Struktureinheiten (D) enthalten, besonders bevorzugt 15,0 bis 84,4 Mol-% der einen oder der mehreren Struktureinheiten (A), 0,5 bis 4,4 Mol-% der einen oder der mehreren Struktureinheiten (B), 15,0 bis 80,0 Mol-% der einen oder der mehreren Struktureinheiten (C) und 0,1 bis 40,0 Mol-% der einen oder der mehreren Struktureinheiten (D) enthalten, und
insbesondere bevorzugt 23,0 bis 78,9 Mol-% der einen oder der mehreren Struktureinheiten (A), 1,0 bis 4,4 Mol-% der einen oder der mehreren Struktureinheiten (B), 20,0 bis 74,0 Mol-% der einen oder der mehreren Struktureinheiten (C) und 0,1 bis 30,0 Mol-% der einen oder der mehreren Struktureinheiten (D) enthalten.

Sofern die erfindungsgemäßen Copolymere eine oder mehrere Struktureinheiten (D) enthalten, enthalten sie in einer besonders bevorzugten Ausführungsform der Erfindung eine oder mehrere Struktureinheiten (D) ausgewählt aus den Struktureinheiten der folgenden allgemeinen Formel (VIII): 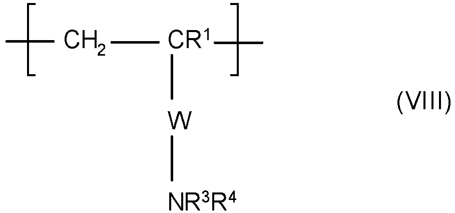 worin
- W: gleich oder verschieden ist und durch -CO-O-(CH₂)ₓ repräsentiert wird,
- x: eine ganze Zahl von 1 bis 6, bevorzugt 2 oder 3 ist,
- R¹: gleich oder verschieden ist und Wasserstoff und/oder Methyl bedeutet, und
- R³ und R⁴: jeweils gleich oder verschieden sind und unabhängig voneinander jeweils durch Wasserstoff, einen aliphatischen Kohlenwasserstoffrest mit 1 bis 20, vorzugsweise 1 bis 4, C-Atomen, einen cycloaliphatischen Kohlenwasserstoffrest mit 5 bis 20, vorzugsweise 5 bis 8, C-Atomen, einen Arylrest mit 6 bis 14 C-Atomen und/oder Polyethylenglykol (PEG) repräsentiert werden.

Sofern die erfindungsgemäßen Copolymere eine oder mehrere Struktureinheiten (D) enthalten, sind diese in einer insbesondere bevorzugten Ausführungsform der Erfindung ausgewählt aus den Struktureinheiten der Formel (VIII).

Unter den Struktureinheiten der Formel (VIII) sind diejenigen bevorzugt, welche das Polymerisationsprodukt mindestens einer Monomerspezies ausgewählt aus der Gruppe bestehend aus [2-(Methacryloyloxy)-ethyl]-dimethylamin, [2-(Acryloyloxy)-ethyl]-dimethylamin, [2-(Methacryloyloxy)-ethyl]-diethylamin und [2-(Acryloyloxy)-ethyl]-diethylamin darstellen.

Sofern die erfindungsgemäßen Copolymere eine oder mehrere Struktureinheiten (D) enthalten, enthalten sie in einer weiteren besonders bevorzugten Ausführungsform der Erfindung eine oder mehrere Struktureinheiten (D) ausgewählt aus den Struktureinheiten der folgenden allgemeinen Formeln (IX) und/oder (X): 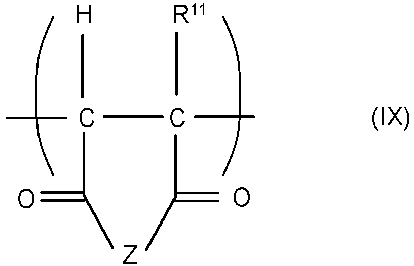 worin
- R¹¹: gleich oder verschieden ist und repräsentiert wird durch H und/oder Methyl;
- Z: gleich oder verschieden ist und repräsentiert wird durch O und/oder NH; 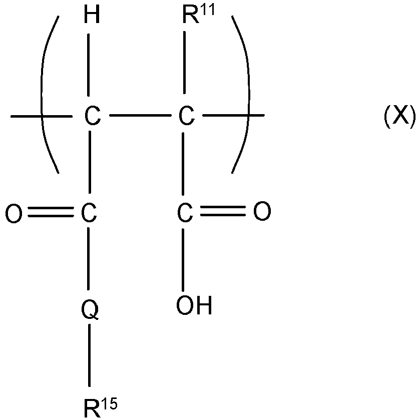
worin
- R¹¹: gleich oder verschieden ist und repräsentiert wird durch H und/oder Methyl;
- Q: gleich oder verschieden ist und repräsentiert wird durch O und/oder NH;
und
- R¹⁵: gleich oder verschieden ist und repräsentiert wird durch H, (CₙH₂ₙ)-SO₃H mit n = 0, 1, 2, 3 oder 4; (CₙH₂ₙ)-OH mit n = 0, 1, 2, 3 oder 4; (CₙH₂ₙ)-PO₃H₂ mit n = 0, 1, 2, 3 oder 4; (CₙH₂ₙ)-OPO₃H₂ mit n = 0, 1, 2, 3 oder 4; (C₆H₄)-SO₃H; (C₆H₄)-PO₃H₂; (C₆H₄)-OPO₃H₂ und/oder (CₘH₂ₘ)ₑ-O-(A'O)ᵤ-R¹⁶ mit m = 0, 1, 2, 3 oder 4, e = 0, 1, 2, 3 oder 4,
A' = C_{x'}H_{2x'} mit x' = 2, 3, 4 oder 5, u = eine ganze Zahl von 1 bis 350 und R¹⁶ gleich oder verschieden sowie repräsentiert durch eine unverzweigte oder verzweigte C₁-C₄-Alkylgruppe.

Sofern die erfindungsgemäßen Copolymere eine oder mehrere Struktureinheiten (D) enthalten, sind diese in einer weiteren insbesondere bevorzugten Ausführungsform der Erfindung ausgewählt aus den Struktureinheiten der Formeln (IX) und/oder (X).

Die Struktureinheiten der Formel (X) können auch in Salzform vorliegen, vorzugsweise als NH₄⁺-, Alkali- oder Erdalkali-Salz und besonders bevorzugt als NH₄⁺- oder als Na⁺-Salz.

Unter den Struktureinheiten der Formeln (IX) und (X) sind diejenigen bevorzugt, welche das Polymerisationsprodukt mindestens einer Monomerspezies ausgewählt aus der Gruppe bestehend aus Maleinsäureanhydrid, Maleinsäure und den Salzen der Maleinsäure darstellen.

Sofern die erfindungsgemäßen Copolymere eine oder mehrere Struktureinheiten (D) enthalten, enthalten sie in einer weiteren besonders bevorzugten Ausführungsform der Erfindung eine oder mehrere Struktureinheiten (D) ausgewählt aus den Struktureinheiten der folgenden allgemeinen Formel (VII): 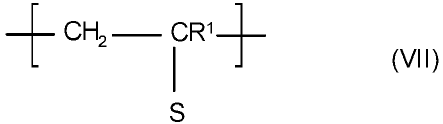 worin
- S: gleich oder verschieden ist und durch -COOMₖ repräsentiert wird,
- R¹: gleich oder verschieden ist und repräsentiert wird durch H und/oder eine unverzweigte oder verzweigte C₁-C₄-Alkylgruppe und vorzugsweise repräsentiert wird durch H oder Methyl; und
- M: ein Kation ausgewählt aus der Gruppe bestehend aus Wasserstoffion, Alkaliion, Erdalkaliion und Erdalkaliion ist, mit k = Wertigkeit.

Sofern die erfindungsgemäßen Copolymere eine oder mehrere Struktureinheiten (D) enthalten, sind diese in einer weiteren insbesondere bevorzugten Ausführungsform der Erfindung ausgewählt aus den Struktureinheiten der Formel (VII).

Unter den Struktureinheiten der Formel (VII) sind diejenigen bevorzugt, welche das Polymerisationsprodukt mindestens einer Monomerspezies ausgewählt aus der Gruppe bestehend aus Acrylsäure, Natriumacrylat, Kaliumacrylat, Methacrylsäure, Natriummethacrylat und Kaliummethacrylat darstellen.

Sofern die erfindungsgemäßen Copolymere eine oder mehrere Struktureinheiten (D) enthalten, enthalten sie in einer weiteren besonders bevorzugten Ausführungsform der Erfindung eine oder mehrere Struktureinheiten (D) ausgewählt aus den Struktureinheiten der folgenden allgemeinen Formeln (Va), (Vb) und/oder (Vc): 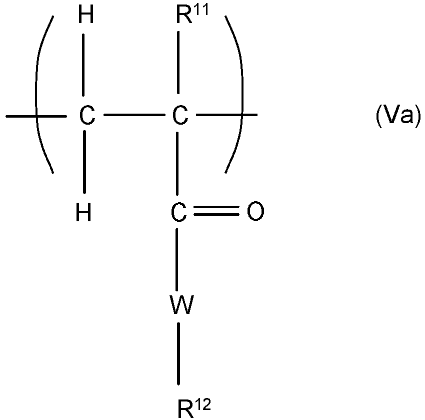 worin
- R¹¹: gleich oder verschieden ist und repräsentiert wird durch H und/oder Methyl;
- W: gleich oder verschieden ist und repräsentiert wird durch O;
- R¹²: gleich oder verschieden ist und repräsentiert wird durch eine verzweigte oder unverzweigte C₁-C₅-Monohydroxyalkylgruppe 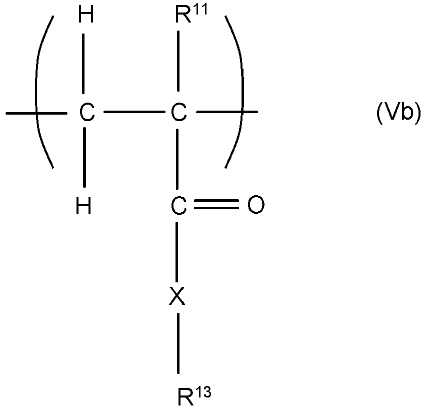
worin
- R¹¹: gleich oder verschieden ist und repräsentiert wird durch H und/oder Methyl;
- X: gleich oder verschieden ist und repräsentiert wird durch O-(CₙH₂ₙ) mit n = 1, 2, 3 oder 4;
- R¹³: gleich oder verschieden ist und repräsentiert wird durch OH, SO₃H, PO₃H₂, O-PO₃H₂ und/oder para-substituiertes C₆H₄-SO₃H 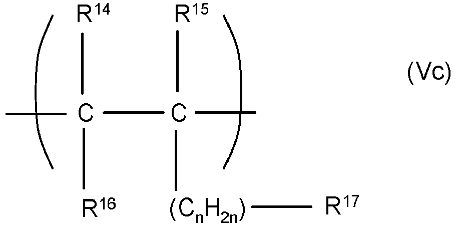
worin
- R¹⁴, R¹⁵ und R¹⁶: jeweils gleich oder verschieden sind und jeweils unabhängig voneinander repräsentiert werden durch H und/oder eine unverzweigte oder verzweigte C₁-C₄-Alkylgruppe;
- n: gleich oder verschieden ist und repräsentiert wird durch 0, 1, 2, 3 und/oder 4;
- R¹⁷: gleich oder verschieden ist und repräsentiert wird durch (C₆H₅), OH, OR^{y}, wobei R^{y} eine Alkylgruppe mit 1 bis 8 und vorzugsweise 4 Kohlenstoffatomen bedeutet, und/oder -OOCCH₃.

Sofern die erfindungsgemäßen Copolymere eine oder mehrere Struktureinheiten (D) enthalten, sind diese in einer weiteren insbesondere bevorzugten Ausführungsform der Erfindung ausgewählt aus den Struktureinheiten der Formeln (Va), (Vb) und/oder (Vc).

Die Gruppen SO₃H, PO₃H₂, O-PO₃H₂ und para-substituiertes C₆H₄-SO₃H in den Struktureinheiten der Formel (Vb) können auch in Salzform vorliegen, vorzugsweise als NH₄⁺-, Alkali- oder Erdalkali-Salz und besonders bevorzugt als NH₄⁺- oder als Na⁺-Salz.

Unter den Struktureinheiten der Formel (Vc) sind diejenigen bevorzugt, welche das Polymerisationsprodukt mindestens einer Monomerspezies ausgewählt aus der Gruppe bestehend aus Vinylbutylether und Vinylacetat darstellen.

In einer weiteren bevorzugten Ausführungsform der Erfindung enthalten die erfindungsgemäßen Copolymere Struktureinheiten (A), (B), (C) und (D) als wiederkehrende Struktureinheiten, aber darüber hinaus keine weiteren wiederkehrenden Struktureinheiten.

In einer hierunter bevorzugten Ausführungsform der Erfindung bestehen die wiederkehrenden Struktureinheiten der erfindungsgemäßen Copolymere aus:
0,1 bis 99,4 Mol-%, vorzugsweise 15,0 bis 84,4 Mol-% und besonders bevorzugt 23,0 bis 78,9 Mol-% einer oder mehrerer kationischer Struktureinheiten (A), die vorzugsweise das Polymerisationsprodukt mindestens einer Monomerspezies ausgewählt aus der Gruppe bestehend aus [3-(Acryloylamino)-propyl]-trimethylammoniumchlorid, [3-(Methacryloylamino)-propyl]-trimethylammoniumchlorid und Diallyldimethylammoniumchlorid darstellen und besonders bevorzugt das Polymerisationsprodukt von [3-(Methacryloylamino)-propyl]-trimethylammoniumchlorid darstellen,
0,4 bis 4,5 Mol-%, vorzugsweise 0,5 bis 4,4 Mol-% und besonders bevorzugt 1,0 bis 4,4 Mol-% vorzugsweise einer oder mehrerer makromonomerer Struktureinheiten (B) der allgemeinen Formel (III), worin R^{x} gleich oder verschieden ist und durch H und/oder Methyl repräsentiert wird, Z C=O ist, I, im molaren Mittel, eine Zahl von 1 bis 5, vorzugsweise von 1 bis 4 und besonders bevorzugt von 2 bis 4 ist, und p, im molaren Mittel, eine Zahl von 1 bis 150, vorzugsweise von 11 bis 150 und besonders bevorzugt von 22 bis 150 ist, oder R^{x} H ist, Z O(CH₂)₄ bedeutet, I = 0 ist und p, im molaren Mittel, eine Zahl von 1 bis 150, vorzugsweise von 11 bis 150 und besonders bevorzugt von 22 bis 150 ist, und besonders bevorzugt einer oder mehrerer makromonomerer Struktureinheiten (B) der allgemeinen Formel (III), worin R^{x} H ist, Z O(CH₂)₄ bedeutet, I = 0 ist und p, im molaren Mittel, eine Zahl von 1 bis 150, vorzugsweise von 11 bis 150 und besonders bevorzugt von 22 bis 150 ist,
0,1 bis 99,4 Mol-%, vorzugsweise 15,0 bis 80,0 Mol-% und besonders bevorzugt 20,0 bis 74,0 Mol-% einer oder mehrerer Struktureinheiten (C), die vorzugsweise das Polymerisationsprodukt mindestens einer Monomerspezies ausgewählt aus der Gruppe bestehend aus N,N-Dimethylacrylamid und N-Isopropylacrylamid darstellen, und besonders bevorzugt das Polymerisationsprodukt von N,N-Dimethylacrylamid darstellen und
0,1 bis 99,4 Mol-%, vorzugsweise 0,1 bis 40,0 Mol-% und besonders bevorzugt 0,1 bis 30,0 Mol-% einer oder mehrerer Struktureinheiten (D) enthalten, die vorzugsweise das Polymerisationsprodukt mindestens einer Monomerspezies ausgewählt aus der Gruppe bestehend aus Maleinsäureanhydrid, Maleinsäure und den Salzen der Maleinsäure darstellen.

Vorzugsweise liegen die Struktureinheiten (A), (B), (C) und gegebenenfalls (D) der erfindungsgemäßen Copolymere in statistischer, blockförmiger, alternierender oder gradientenartiger Verteilung im Copolymer vor.

Vorzugsweise betragen die gewichtsmittleren Molekulargewichte M_{w} der erfindungsgemäßen Copolymere von 10 000 bis 250 000 g/mol, besonders bevorzugt von 15 000 bis 200 000 g/mol und insbesondere bevorzugt von 20 000 bis 150 000 g/mol.

Die erfindungsgemäßen Copolymere enthalten wiederkehrende Struktureinheiten (allgemein -C(R^{s1})(R^{s2})-C(R^{s3})(R^{s4})-), die das Polymerisationsprodukt von entsprechenden Monomeren mit polymerisierbaren olefinischen Doppelbindungen (allgemein C(R^{s1})(R^{s2})=C(R^{s3})(R^{s4})) darstellen. Die Reste R^{s1}, R^{s2}, R^{s3} und R^{s4} sind hier nicht näher definiert, sondern nur der Vollständigkeit halber als an die entsprechenden Kohlenstoffatome "C" gebundene Reste angegeben Die in den erfindungsgemäßen Copolymeren enthaltenen Struktureinheiten (A), (B) und (C) sowie die gegebenenfalls zusätzlich in den erfindungsgemäßen Copolymeren enthaltene Struktureinheit (D) sind beispielsweise derartige wiederkehrende Struktureinheiten. Struktureinheiten, die beispielsweise aus Radikalstartern oder aus gegebenenfalls bei der Copolymerisation verwendeten Kettenübertragungsreglern stammen, stellen keine wiederkehrenden Struktureinheiten dar. Demzufolge werden unter wiederkehrenden Struktureinheiten beispielsweise keine terminalen Gruppen verstanden. Die für die Struktureinheiten (A), (B), (C) und (D) angegebenen Mengenangaben in Mol-% sind auf die Gesamtmenge der in den jeweiligen erfindungsgemäßen Copolymeren enthaltenen wiederkehrenden Struktureinheiten bezogen.

Die erfindungsgemäßen Copolymere können nach Methoden, die dem Fachmann geläufig sind, hergestellt werden. Besonders bevorzugt können die erfindungsgemäßen Copolymere durch radikalische Lösemittel-Polymerisation hergestellt werden. Gängige Lösemittel können bevorzugt polare Lösemittel wie Alkohole oder Wasser, sowie Alkohol-Wasser-Gemische sein. Die Polymerisation wird durch Radikalquellen wie z. B. anorganische Persulfate, organische Azoverbindungen, Peroxide, anorganische Redoxsysteme, oder UV-Licht gestartet. Außerdem können Kettenübertragungsregler eingesetzt werden, welche weniger reaktive Radikale bilden, um das Molekulargewicht der Copolymere zu kontrollieren. Solche Kettenübertragungsregler sind z. B. Phenole, Thiole, beispielsweise 2-Mercaptoethansulfonat-Natrium, oder Natriumhypophosphit. In einer beispielhaften Durchführung werden die Monomere zur Herstellung der erfindungsgemäßen Copolymere und gegebenenfalls ein Kettenübertragungsregler im Lösemittel gelöst, Sauerstoff ausgetrieben, dann die Temperatur erhöht, und der Radikal-Initiator zudosiert. Die Copolymerisation wird dann bei der gewünschten Temperatur für die gewünschte Zeitdauer durchgeführt. Der Reaktionsansatz wird danach gegebenenfalls abgekühlt und das gebildete Copolymer entweder in Lösung weiter verarbeitet oder aufgearbeitet, z. B. kann die das Copolymer enthaltende Lösung durch teilweises Abdampfen des Lösungsmittels, gegebenenfalls unter vermindertem Druck, aufkonzentriert werden oder das Lösungsmittel durch Abdampfen vollständig entfernt werden oder auch das Copolymer anderweitig isoliert werden, beispielsweise durch Gefriertrocknung oder Präzipitation.

Wie bereits erwähnt können die erfindungsgemäßen Copolymere in vorteilhafter Weise in Reinigungsmittel-Zusammensetzungen eingesetzt werden. In den Reinigungsmittel-Zusammensetzungen stellen die erfindungsgemäßen Copolymere die Komponente Z1) dar. Diese Reinigungsmittel-Zusammensetzungen werden im Folgenden näher beschrieben.

Vorzugsweise enthalten die Reinigungsmittel-Zusammensetzungen ein oder mehrere Copolymere der Komponente Z1) in einer Menge von 0,005 bis 10 Gew.-%, besonders bevorzugt in einer Menge von 0,01 bis 5 Gew.-% und insbesondere bevorzugt in einer Menge von 0,1 bis 0,5 Gew.-%, jeweils bezogen auf das Gesamtgewicht der Reinigungsmittel-Zusammensetzung.

### Komponente Z2)

Die Reinigungsmittel-Zusammensetzungen enthalten als Komponente Z2) ein oder mehrere Tenside.

Vorzugsweise ist das eine oder sind die mehreren Tenside der Komponente Z2) der Reinigungsmittel-Zusammensetzungen ausgewählt aus der Gruppe bestehend aus anionischen, nichtionischen, amphoteren und kationischen Tensiden.

Die Reinigungsmittel-Zusammensetzungen können gegebenenfalls anionische Tenside, z. B. Alkylbenzolsulfonate, Alkylsulfate, Alkylethersulfate, Alkansulfonate, Alkylethercarbonsäuren, Sulfosuccinate, Isethionate, Taurate, Glycinate und/oder Acylglutamate enthalten. Die Alkylketten der genannten Tenside können synthetisch oder natürlichen Ursprungs sein und bestehen aus 8 bis 30, vorzugsweise 8 bis 18 und besonders bevorzugt 12 bis 14 C-Atomen in linearer oder verzweigter Anordnung.

Anionische Tenside, die erfindungsgemäß eingesetzt werden, sind bevorzugt aliphatische Sulfate wie Fettalkoholsulfate, Fettalkoholethersulfate, Dialkylethersulfate, Monoglyceridsulfate und aliphatische Sulfonate wie Alkansulfonate, Olefinsulfonate, Ethersulfonate, n-Alkylethersulfonate, Estersulfonate und Ligninsulfonate. Ebenfalls im Rahmen der vorliegenden Erfindung verwendbar sind Alkylbenzolsulfonate, Fettsäurecyanamide, Sulfosuccinate (Sulfobernsteinsäureester), Sulfosuccinamate, Sulfosuccinamide, Fettsäureisethionate, Acylaminoalkansulfonate (Fettsäuretauride), Fettsäuresarcosinate, Ethercarbonsäuren und Alkyl(ether)phosphate sowie [alpha]-Sulfofettsäuresalze, Acylglutamate, Monoglyceriddisulfate und Alkylether des Glycerindisulfats.

Bevorzugt davon sind die Fettalkoholsulfate und/oder Fettalkoholethersulfate, insbesondere die Fettalkoholsulfate. Fettalkoholsulfate sind Produkte von Sulfatierreaktionen an entsprechenden Alkoholen, während Fettalkoholethersulfate Produkte von Sulfatierreaktionen an alkoxylierten Alkoholen sind. Dabei versteht der Fachmann allgemein unter alkoxylierten Alkoholen die Reaktionsprodukte von Alkylenoxid, bevorzugt Ethylenoxid, mit Alkoholen, im Sinne der vorliegenden Erfindung bevorzugt mit längerkettigen Alkoholen. In der Regel entsteht aus n Molen Ethylenoxid und einem Mol Alkohol, abhängig von den Reaktionsbedingungen, ein komplexes Gemisch von Additionsprodukten unterschiedlicher Ethoxylierungsgrade. Eine weitere Ausführungsform der Alkoxylierung besteht im Einsatz von Gemischen der Alkylenoxide, bevorzugt des Gemisches von Ethylenoxid und Propylenoxid. Bevorzugte Fettalkoholethersulfate sind die Sulfate niederethoxylierter Fettalkohole mit 1 bis 4 Ethylenoxideinheiten (EO), insbesondere 1 bis 2 EO, beispielsweise 1,3 EO.

Besonders bevorzugt sind Alkylbenzolsulfonat, Alkansulfonat, Alkyethersulfat oder Alkylsulfat.

Die anionischen Tenside werden üblicherweise als Salze, aber auch als Säure eingesetzt. Bei den Salzen handelt es sich bevorzugt um Alkalimetallsalze, Erdalkalimetallsalze, Ammoniumsalze sowie Mono-, Di- bzw. Trialkanolammoniumsalze, beispielsweise Mono-, Di- bzw. Triethanolammoniumsalze, insbesondere um Lithium-, Natrium-, Kalium- oder Ammoniumsalze, besonders bevorzugt Natrium- oder Kaliumsalze, insbesondere bevorzugt Natriumsalze.

Weitere Tenside können nichtionische, amphotere und/oder kationische Tenside sein, beispielsweise Betaine, Amidobetaine, Aminoxide, Amidoaminoxide, Fettalkoholpolyglykolether, Alkylpolyglykoside oder auch quartäre Ammoniumverbindungen.

Weitere nichtionische Tenside können beispielsweise Alkoxylate sein wie Polyglykolether, Fettalkoholpolyglykolether (Fettalkoholalkoxylate), Alkylphenolpolyglykolether, endgruppenverschlossene Polyglykolether, Mischether und Hydroxymischether und Fettsäurepolyglykolester. Ebenfalls verwendbar sind Ethylenoxid-Propylenoxid-Blockcopolymere und Fettsäurealkanolamide und Fettsäurepolyglykolether. Eine weitere wichtige Klasse nichtionischer Tenside, die erfindungsgemäß verwendet werden kann, sind die Polyol-Tenside und hier besonders die Glykotenside, wie Alkylpolyglykoside, insbesondere Alkylpolyglucoside.

Geeignete Fettalkoholpolyglykolether sind mit Ethylenoxid (EO) und/oder Propylenoxid (PO) alkoxylierte, unverzweigte oder verzweigte, gesättigte oder ungesättigte C₈-C₂₂-Alkohole mit einem Alkoxylierungsgrad bis zu 30, vorzugsweise ethoxylierte C₁₀-C₁₈-Fettalkohole mit einem Ethoxylierungsgrad von weniger als 30, besonders bevorzugt 1 bis 20, insbesondere bevorzugt 1 bis 12 und außerordentlich bevorzugt 1 bis 8, beispielsweise C₁₂-C₁₄-Fettalkoholethoxylate mit 8 EO.

Alkylpolyglykoside sind Tenside, die durch die Reaktion von Zuckern und Alkoholen nach den einschlägigen Verfahren der präparativen organischen Chemie erhalten werden können, wobei es je nach Art der Herstellung zu einem Gemisch monoalkylierter, oligomerer oder polymerer Zucker kommt. Bevorzugte Alkylpolyglykoside sind die Alkylpolyglukoside, wobei besonders bevorzugt der Alkohol ein langkettiger Fettalkohol oder ein Gemisch langkettiger Fettalkohole mit verzweigten oder unverzweigten C₈- bis C₁₈-Alkylketten ist und der Oligomerisierungsgrad (DP) der Zucker von 1 bis 10, vorzugsweise von 1 bis 6, besonders bevorzugt von 1,1 bis 3 und insbesondere bevorzugt von 1,1 bis 1,7, beträgt, beispielsweise C₈-C₁₀-Alkyl-1,5-glucosid (DP von 1,5).

Zu den Amphotensiden (zwitterionischen Tensiden), die erfindungsgemäß eingesetzt werden können, zählen Betaine, Aminoxide, Alkylamidoalkylamine, alkylsubstituierte Aminosäuren, acylierte Aminosäuren bzw. Biotenside.

Geeignete Betaine sind die Alkylbetaine, die Alkylamidobetaine, die Imidazoliniumbetaine, die Sulfobetaine (INCI Sultaines) und die Amidosulfobetaine sowie die Phosphobetaine. Beispiele geeigneter Betaine und Sulfobetaine sind die folgenden gemäss INCI benannten Verbindungen: Almondamidopropyl Betaine, Apricotamidopropylbetaine, Avocadamidopropylbetaine, Babassuamidopropylbetaine, Behenamidopropylbetaine, Behenylbetaine, Betaine, Canolamidopropylbetaine, Capryl/Capramidopropylbetaine, Carnitine, Cetylbetaine, Cocamidoethylbetaine, Cocamidopropylbetaine, Cocamidopropylhydroxysultaine, Cocobetaine, Cocohydroxysultaine, Coco/Oleamidopropylbetaine, Coco-Sultaine, Decylbetaine, Dihydroxyethyloleylglycinate, Dihydroxyethyl Soy Glycinate, Dihydroxyethylstearylglycinate, Dihydroxyethyl Tallow Glycinate, Dimethicone Propyl PG-Betaine, Erucamidopropylhydroxysultaine, Hydrogenated Tallow Betaine, Isostearamidopropylbetaine, Lauramidopropylbetaine, Laurylbetaine, Laurylhydroxysultaine, Laurylsultaine, Milkamidopropylbetaine, Minkamidopropylbetaine, Myristamidopropylbetaine, Myristylbetaine, Oleamidopropylbetaine, Oleamidopropylhydroxysultaine, Oleylbetaine, Olivamidopropylbetaine, Palmamidopropylbetaine, Palmitamidopropylbetaine, Palmitoyl Carnitine, Palm Kernelamidopropyl Betaine, Polytetrafluoroethylene Acetoxypropyl Betaine, Ricinoleamidopropylbetaine, Sesamidopropylbetaine, Soyamidopropylbetaine, Stearamidopropylbetaine, Stearylbetaine, Tallowamidopropylbetaine, Tallowamidopropylhydroxysultaine, Tallowbetaine, Tallowdihydroxyethylbetaine, Undecylenamidopropylbetaine und Wheat Germamidopropyl Betaine.

Zu den erfindungsgemäß geeigneten Aminoxiden gehören Alkylaminoxide, insbesondere Alkyldimethylaminoxide, Alkylamidoaminoxide und Alkoxyalkylaminoxide.

Beispiele geeigneter Aminoxide sind die folgenden gemäß INCI benannten Verbindungen: Almondamidopropylamine Oxide, Babassuamidopropylamine Oxide, Behenamine Oxide, Cocamidopropyl Amine Oxide, Cocamidopropylamine Oxide, Cocamine Oxide, Coco-Morpholine Oxide, Decylamine Oxide, Decyltetradecylamine Oxide, Diaminopyrimidine Oxide, Dihydroxyethyl C₈-C₁₀ Alkoxypropylamine Oxide, Dihydroxyethyl C₉-C₁₁ Alkoxypropylamine Oxide, Dihydroxyethyl C₁₂-C₁₅ Alkoxypropylamine Oxide, Dihydroxyethyl Cocamine Oxide, Dihydroxyethyl Lauramine Oxide, Dihydroxyethyl Stearamine Oxide, Dihydroxyethyl Tallowamine Oxide, Hydrogenated Palm Kernel Amine Oxide, Hydrogenated Tallowamine Oxide, Hydroxyethyl Hydroxypropyl C₁₂-C₁₅ Alkoxypropylamine Oxide, Isostearamidopropylamine Oxide, Isostearamidopropyl Morpholine Oxide, Lauramidopropylamine Oxide, Lauramine Oxide, Methyl Morpholine Oxide, Milkamidopropyl Amine Oxide, Minkamidopropylamine Oxide, Myristamidopropylamine Oxide, Myristamine Oxide, Myristyl/Cetyl Amine Oxide, Oleamidopropylamine Oxide, Oleamine Oxide, Olivamidopropylamine Oxide, Palmitamidopropylamine Oxide, Palmitamine Oxide, PEG-3 Lauramine Oxide, Potassium Dihydroxyethyl Cocamine Oxide Phosphate, Potassium Trisphosphonomethylamine Oxide, Sesamidopropylamine Oxide, Soyamidopropylamine Oxide, Stearamidopropylamine Oxide, Stearamine Oxide, Tallowamidopropylamine Oxide, Tallowamine Oxide, Undecylenamidopropylamine Oxide und Wheat Germamidopropylamine Oxide.

Beispielhafte Alkylamidoalkylamine sind die folgenden gemäß INCI benannten Verbindungen: Cocoamphodipropionic Acid, Cocobetainamido Amphopropionate, DEA-Cocoamphodipropionate, Disodium Caproamphodiacetate, Disodium Caproamphodipropionate, Disodium Capryloamphodiacetate, Disodium Capryloamphodipropionate, Disodium Cocoamphocarboxyethylhydroxypropylsulfonate, Disodium Cocoamphodiacetate, Disodium Cocoamphodipropionate, Disodium Isostearoamphodiacetate, Disodium Isostearoamphodipropionate, Disodium Laureth-5 Carboxyamphodiacetate, Disodium Lauroamphodiacetate, Disodium Lauroamphodipropionate, Disodium Oleoamphodipropionate, Disodium PPG-2-Isodeceth-7 Carboxyamphodiacetate, Disodium Stearoamphodiacetate, Disodium Tallowamphodiacetate, Disodium Wheatgermamphodiacetate, Lauroamphodipropionic Acid, Quaternium-85, Sodium Caproamphoacetate, Sodium Caproamphohydroxypropylsulfonate, Sodium Caproamphopropionate, Sodium Capryloamphoacetate, Sodium Capryloamphohydroxypropylsulfonate, Sodium Capryloamphopropionate, Sodium Cocoamphoacetate, Sodium Cocoamphohydroxypropylsulfonate, Sodium Cocoamphopropionate, Sodium Cornamphopropionate, Sodium Isostearoamphoacetate, Sodium Isostearoamphopropionate, Sodium Lauroamphoacetate, Sodium Lauroamphohydroxypropylsulfonate, Sodium Lauroampho PG-Acetate Phosphate, Sodium Lauroamphopropionate, Sodium Myristoamphoacetate, Sodium Oleoamphoacetate, Sodium Oleoamphohydroxypropylsulfonate, Sodium Oleoamphopropionate, Sodium Ricinoleoamphoacetate, Sodium Stearoamphoacetate, Sodium Stearoamphohydroxypropylsulfonate, Sodium Stearoamphopropionate, Sodium Tallamphopropionate, Sodium Tallowamphoacetate, Sodium Undecylenoamphoacetate, Sodium Undecylenoamphopropionate, Sodium Wheat Germamphoacetate und Trisodium Lauroampho PG-Acetate Chloride Phosphate.

Beispielhafte alkylsubstituierte Aminosäuren sind die folgenden gemäß INCI benannten Verbindungen: Aminopropyl Laurylglutamine, Cocaminobutyric Acid, Cocaminopropionic Acid, DEA-Lauraminopropionate, Disodium Cocaminopropyl Iminodiacetate, Disodium Dicarboxyethyl Cocopropylenediamine, Disodium Lauriminodipropionate, Disodium Steariminodipropionate, Disodium Tallowiminodipropionate, Lauraminopropionic Acid, Lauryl Aminopropylglycine, Lauryl Diethylenediaminoglycine, Myristaminopropionic Acid, Sodium C₁₂-C₁₅ Alkoxypropyl Iminodipropionate, Sodium Cocaminopropionate, Sodium Lauraminopropionate, Sodium Lauriminodipropionate, Sodium Lauroyl Methylaminopropionate, TEA-Lauraminopropionate und TEA-Myristam inopropionate.

Besonders bevorzugt ist das eine oder sind die mehreren Tenside der Komponente Z2) der Reinigungsmittel-Zusammensetzungen ausgewählt aus der Gruppe bestehend aus Fettalkoholpolyglykolethern, Alkylpolyglykosiden, Alkylbenzolsulfonaten, Alkansulfonaten, Alkylethersulfaten, Alkylsulfaten und quartären Ammoniumverbindungen.

Der Anteil des einen oder der mehreren Tenside der Komponente Z2) an der Reinigungsmittel-Zusammensetzung beträgt vorzugsweise von 0,1 bis 20 Gew.-% und besonders bevorzugt von 0,1 bis 6,0 Gew.-%, jeweils bezogen auf das Gesamtgewicht der Reinigungsmittel-Zusammensetzung.

### Komponente Z3)

Die Reinigungsmittel-Zusammensetzungen enthalten Wasser als Komponente Z3).

Der Anteil von Wasser an den Reinigungsmittel-Zusammensetzungen beträgt vorzugsweise von 10,00 bis 99,89 Gew.-%, besonders bevorzugt von 40,00 bis 98,00 Gew.-% und insbesondere bevorzugt von 70 bis 97,00 Gew.-%, jeweils bezogen auf das Gesamtgewicht der Reinigungsmittel-Zusammensetzungen.

Vorzugsweise enthalten die Reinigungsmittel-Zusammensetzungen zusätzlich zu dem einen oder den mehreren Copolymeren der Komponente Z1), dem einen oder den mehreren Tensiden der Komponente Z2) und Wasser der Komponente Z3) eine oder mehrere weitere Substanzen ausgewählt aus den Komponenten Z4), Z5), Z6) oder/oder Z7):
Z4) eine oder mehrere anorganische oder organische Säuren als Komponente Z4),
Z5) einen oder mehrere Komplexbildner als Komponente Z5),
Z6) ein oder mehrere von Wasser verschiedene Lösungsmittel als Komponente Z6),
Z7) ein oder mehrere weitere Additive, vorzugsweise ausgewählt aus der Gruppe bestehend aus Viskositätsreglern, Enzymen, Bleichmitteln, Konservierungsmitteln, Duftstoffen und Farbstoffen, als Komponente Z7),
und beträgt der pH-Wert der Reinigungsmittel-Zusammensetzung vorzugsweise von 1 bis 14 und besonders bevorzugt von 3 bis 11.

### Komponente Z4)

Bei den Säuren kann es sich um anorganische Säuren, z. B. Salzsäure, Schwefelsäure, Salpetersäure, Amidosulfonsäure und/oder Phosphorsäure handeln.

In einer bevorzugten Ausführungsform der Erfindung sind die enthaltenden Säuren organische Säuren, besonders bevorzugt nicht-komplexierende Säuren wie Milchsäure, Ameisensäure, Essigsäure, Glykolsäure und/oder Gluconsäure. Weitere bevorzugte Säuren sind Apfelsäure, Zitronensäure, Weinsäure, Adipinsäure und/oder Bernsteinsäure. In einer bevorzugten Ausführungsform enthalten die Reinigungsmittel-Zusammensetzungen eine Säure. In einer weiteren bevorzugten Ausführungsform der Erfindung enthalten die Reinigungsmittel-Zusammensetzungen eine Mischung von zwei oder mehreren Säuren.

Die eingesetzte Säuremenge beträgt, wenn sie von 0% verschieden ist, vorzugsweise von 0,1 bis 10 % Gew.-%, besonders bevorzugt von 0,2 bis 5 Gew.-% und insbesondere bevorzugt von 1 bis 3 Gew.-%, jeweils bezogen auf das Gesamtgewicht der Reinigungsmittel-Zusammensetzung.

In einer weiteren bevorzugten Ausführungsform der Erfindung kann zur Pufferung des pH-Werts auch ein Salz einer Säure zugesetzt werden, insbesondere das Natrium-, Kalium- oder Magnesiumsalz, aber auch weitere Alkali- oder Erdalkalisalze oder auch Ammoniumsalze, insbesondere flüchtiger Amine wie Monoethanolamin, Ammoniak, Diethanolamine, aber auch Triethanolamin. In einer besonders bevorzugten Ausführungsform der Erfindung kommen das Salz oder die Salze der bereits enthaltenen Säure oder Säuren zum Einsatz.

### Komponente Z5)

Geeignete Komplexbildner sind dem Fachmann bekannt und beispielhaft in der DE-A-10 2009 001 559 beschrieben.

Komplexbildner (INCI Chelating Agents), auch Sequestriermittel genannt, sind Inhaltsstoffe, die Metallionen zu komplexieren und inaktivieren vermögen, um ihre nachteiligen Wirkungen auf die Stabilität oder das Aussehen der Mittel, beispielsweise Trübungen, zu verhindern. Einerseits ist es dabei wichtig, die mit zahlreichen Inhaltsstoffen inkompatiblen Calcium- und Magnesiumionen der Wasserhärte zu komplexieren. Die Komplexierung der Ionen von Schwermetallen wie Eisen oder Kupfer verzögert andererseits die oxidative Zersetzung der fertigen Mittel. Zudem unterstützen die Komplexbildner die Reinigungswirkung.

Geeignet sind beispielsweise die folgenden gemäß INCI bezeichneten Komplexbildner: Aminotrimethylene, Phosphonsäure, Beta-Alanine Diacetic Acid, Calcium Disodium EDTA, Citric Acid, Cyclodextrin, Cyclohexanediamine Tetraacetic Acid, Diammonium Citrate, Diammonium EDTA, Diethylenetriamine Pentamethylene Phosphonic Acid, Dipotassium EDTA, Disodium Azacycloheptane Diphosphonate, Disodium EDTA, Disodium Pyrophosphate, EDTA, Etidronic Acid, Galactaric Acid, Gluconic Acid, Glucuronic Acid, HEDTA, Hydroxypropyl Cyclodextrin, Methyl Cyclodextrin, Pentapotassium Triphosphate, Pentasodium Aminotrimethylene Phosphonate, Pentasodium Ethylenediamine Tetramethylene Phosphonate, Pentasodium Pentetate, Pentasodium Triphosphate, Pentetic Acid, Phytic Acid, Potassium Citrate, Potassium EDTMP, Potassium Gluconate, Potassium Polyphosphate, Potassium Trisphosphonomethylamine Oxide, Ribonic Acid, Sodium Chitosan Methylene Phosphonate, Sodium Citrate, Sodium Diethylenetriamine Pentamethylene Phosphonate, Sodium Dihydroxyethylglycinate, Sodium EDTMP, Sodium Gluceptate, Sodium Gluconate, Sodium Glycereth-1 Polyphosphate, Sodium Hexametaphosphate, Sodium Metaphosphate, Sodium Metasilicate, Sodium Phytate, Sodium Polydimethylglycinophenolsulfonate, Sodium Trimetaphosphate, TEA-EDTA, TEA-Polyphosphate, Tetrahydroxyethyl Ethylenediamine, Tetrahydroxypropyl Ethylenediamine, Tetrapotassium Etidronate, Tetrapotassium Pyrophosphate, Tetrasodium EDTA, Tetrasodium Etidronate, Tetrasodium Pyrophosphate, Tripotassium EDTA, Trisodium Dicarboxymethyl Alaninate, Trisodium EDTA, Trisodium HEDTA, Trisodium NTA und Trisodium Phosphate.

Der Anteil der Komponente Z5) an der Reinigungsmittel-Zusammensetzung beträgt, wenn er von 0 % verschieden ist, vorzugsweise von 0,1 bis 10 Gew.-%, besonders bevorzugt von 0,1 bis 3,0 Gew.-% und insbesondere bevorzugt von 0,1 bis 1,0 Gew.-%, jeweils bezogen auf das Gesamtgewicht der Reinigungsmittel-Zusammensetzung.

### Komponente Z6)

Geeignete wasserlösliche Lösungsmittel sind dem Fachmann bekannt und beispielhaft in der US 2005/0239674 beschrieben. Bevorzugt kommen Alkohole, Glycerin, Glykole und Glykolether zum Einsatz, bevorzugt niedere Alkohole wie Ethanol, Isopropanol, Butanol, Isobutanol oder Alkylenlykole, z. B. Propylenglykol, sowie Glykolether, z. B. Ethylenglykol-n-butylether oder Propylenglykol-n-butylether.

In einer bevorzugten Ausführungsform kommen Mischungen mehrerer Lösungsmittel zum Einsatz.

Der Anteil der Komponente Z6) an der Reinigungsmittel-Zusammensetzung beträgt, wenn er von 0 % verschieden ist, vorzugsweise von 0,1 bis 10 Gew.-%, besonders bevorzugt von 0,1 bis 3 Gew.-% und insbesondere bevorzugt von 0,5 bis 1,5 Gew.-%, bezogen auf das Gesamtgewicht der Reinigungsmittel-Zusammensetzung.

### Komponente Z7)

Geeignete Additive sind weitere übliche Inhaltsstoffe von Reinigungsmitteln, beispielsweise Desinfektionsmittel, pH-Stellmittel, Farbstoffe, Duftstoffe, Puffer, Viskositätsregulatoren, Korrosionsinhibitoren, organische und anorganische Salze, optische Aufheller, Bleichmittel, Antioxidantien, Opacifier, Hydrotrope, Abrasiva, Konservierungsmittel, Oxidationsmittel und/oder Insektizide. Diese Additive sind dem Fachmann hinlänglich bekannt und beispielhaft in der DE-A-10 2009 001 559 beschrieben.

Erfindungsgemäß können der Reinigungsmittel-Zusammensetzung Bleichmittel zugesetzt werden. Geeignete Bleichmittel umfassen Peroxide, Persäuren und/oder Perborate, besonders bevorzugt ist H₂O₂.

Die Reinigungsmittel-Zusammensetzungen können auch Enzyme enthalten, vorzugsweise Proteasen, Lipasen, Amylasen, Hydrolasen und/oder Cellulasen. Sie können den Reinigungsmittel-Zusammensetzungen in jeder nach dem Stand der Technik etablierten Form zugesetzt werden. Hierzu gehören bei flüssigen oder gelförmigen Reinigungsmittel-Zusammensetzungen insbesondere Lösungen der Enzyme, vorteilhafterweise möglichst konzentriert, wasserarm und/oder mit Stabilisatoren versetzt. Alternativ können die Enzyme verkapselt werden, beispielsweise durch Sprühtrocknung oder Extrusion der Enzymlösung zusammen mit einem, vorzugsweise natürlichen Polymer oder in Form von Kapseln, beispielsweise solchen, bei denen die Enzyme wie in einem erstarrten Gel eingeschlossen sind oder in solchen vom Kern-Schale-Typ, bei dem ein enzymhaltiger Kern mit einer Wasser-, Luft- und/oder Chemikalienundurchlässigen Schutzschicht überzogen ist. In aufgelagerten Schichten können zusätzlich weitere Wirkstoffe, beispielsweise Stabilisatoren, Emulgatoren, Pigmente, Bleich- oder Farbstoffe aufgebracht werden. Derartige Kapseln werden nach an sich bekannten Methoden, beispielsweise durch Schüttel- oder Rollgranulation oder in Fluid-bed-Prozessen aufgebracht. Vorteilhafterweise sind derartige Granulate, beispielsweise durch Aufbringen polymerer Filmbildner, staubarm und aufgrund der Beschichtung lagerstabil.

Weiterhin können in enzymhaltigen Reinigungsmittel-Zusammensetzungen Enzymstabilisatoren vorhanden sein, um ein in einer Reinigungsmittel-Zusammensetzung enthaltenes Enzym vor Schädigungen wie beispielsweise Inaktivierung, Denaturierung oder Zerfall etwa durch physikalische Einflüsse, Oxidation oder proteolytische Spaltung zu schützen. Als Enzymstabilisatoren sind, jeweils in Abhängigkeit vom verwendeten Enzym, insbesondere geeignet: Benzamidin-Hydrochlorid, Borax, Borsäuren, Boronsäuren oder deren Salze oder Ester, vor allem Derivate mit aromatischen Gruppen, etwa substituierte Phenylboronsäuren beziehungsweise deren Salze oder Ester; Peptidaldehyde (Oligopeptide mit reduziertem C-Terminus), Aminoalkohole wie Mono-, Di-, Triethanol- und -Propanolamin und deren Mischungen, aliphatische Carbonsäuren bis zu C₁₂, wie Bernsteinsäure, andere Dicarbonsäuren oder Salze der genannten Säuren; endgruppenverschlossene Fettsäureamidalkoxylate; niedere aliphatische Alkohole und vor allem Polyole, beispielsweise Glycerin, Ethylenglykol, Propylenglykol oder Sorbit; sowie Reduktionsmittel und Antioxidantien wie Natrium-Sulfit und reduzierende Zucker. Weitere geeignete Stabilisatoren sind aus dem Stand der Technik bekannt.

Bevorzugt werden Kombinationen von Stabilisatoren verwendet, beispielsweise die Kombination aus Polyolen, Borsäure und/oder Borax, die Kombination von Borsäure oder Borat, reduzierenden Salzen und Bernsteinsäure oder anderen Dicarbonsäuren oder die Kombination von Borsäure oder Borat mit Polyolen oder Polyaminoverbindungen und mit reduzierenden Salzen.

Erfindungsgemäß geeignet als Desinfektions- und/oder Konservierungsmittel sind beispielsweise antimikrobielle Wirkstoffe aus den Gruppen der Alkohole, Aldehyde, antimikrobiellen Säuren bzw. deren Salze, Carbonsäureester, Säureamide, Phenole, Phenolderivate, Diphenyle, Diphenylalkane, Harnstoffderivate, Sauerstoff-, Stickstoff-Acetale sowie -Formale, Benzamidine, Isothiazole und deren Derivate wie Isothiazoline und Isothiazolinone, Phthalimidderivate, Pyridinderivate, antimikrobiellen oberflächenaktiven Verbindungen, Guanidine, antimikrobiellen amphoteren Verbindungen, Chinoline, 1,2-Dibrom-2,4-dicyanobutan, Iodo-2-propinyl-butyl-carbamat, Iod, lodophore und Peroxide. Bevorzugte antimikrobielle Wirkstoffe werden vorzugsweise ausgewählt aus der Gruppe umfassend Ethanol, n-Propanol, i-Propanol, 1,3-Butandiol, Phenoxyethanol, 1,2-Propylenglykol, Glycerin, Undecylensäure, Zitronensäure, Milchsäure, Benzoesäure, Salicylsäure, Thymol, 2-Benzyl-4-chlorphenol, 2,2'-Methylen-bis-(6-brom-4-chlorphenol), 2,4,4'-Trichlor-2'-hydroxydiphenylether, N-(4-Chlorphenyl)-N-(3,4-dichlorphenyl)-harnstoff, N,N'-(1,10-decandiyldi-1-pyridinyl-4-yliden)-bis-(1-octanamin)-dihydrochlorid, N,N'-Bis-(4-Chlorphenyl)-3,12-diimino-2,4,11,13-tetraazatetradecandiimidamid, antimikrobielle quaternäre oberflächenaktive Verbindungen, Guanidine. Bevorzugte antimikrobiell wirkende oberflächenaktive quaternäre Verbindungen enthalten eine Ammonium-, Sulfonium-, Phosphonium-, Jodonium- oder Arsoniumgruppe, wie sie beispielsweise K. H. Wallhäusser in "Praxis der Sterilisation, Desinfektion - Konservierung: Keimidentifizierung - Betriebshygiene" (5. Auflage - Stuttgart; New York: Thieme, 1995) beschreibt.

Die Begriffe Desinfektion, Sanitation, antimikrobielle Wirkung und antimikrobieller Wirkstoff haben im Rahmen der Erfindung die fachübliche Bedeutung, die beispielsweise von K. H. Wallhäusser in "Praxis der Sterilisation, Desinfektion - Konservierung: Keimidentifizierung - Betriebshygiene" (5. Auflage - Stuttgart; New York: Thieme, 1995) wiedergegeben wird. Während Desinfektion im engeren Sinne der medizinischen Praxis die Abtötung von - theoretisch allen - Infektionskeimen bedeutet, ist unter Sanitation die möglichst weitgehende Eliminierung aller - auch der für den Menschen normalerweise unschädlichen saprophytischen - Keime zu verstehen.

Zu den Polyacryl- und Polymethacryl-Verbindungen zählen beispielsweise die hochmolekularen mit einem Polyalkenylpolyether, insbesondere einem Allylether von Saccharose, Pentaerythrit oder Propylen, vernetzten Homopolymere der Acrylsäure (INCI-Bezeichnung gemäß International Dictionary of Cosmetic Ingredients der The Cosmetic, Toiletry, and Fragrance Association (CTFA): Carbomer), die auch als Carboxyvinylpolymere bezeichnet werden. Solche Polyacrylsäuren sind u. a. von der Firma 3V Sigma unter dem Handelsnamen Polygel®, z. B. Polygel® DA, und von der Firma BFGoodrich unter dem Handelsnamen Carbopol® erhältlich, z. B. Carbopol® 940 (Molekulargewicht ca. 4 000 000), Carbopol® 941 (Molekulargewicht ca. 1 250 000) oder Carbopol® 934 (Molekulargewicht ca. 3 000 000). Weiterhin fallen darunter folgende Acrylsäure-Copolymere:
(i) Copolymere von zwei oder mehr Monomeren aus der Gruppe der Acrylsäure, Methacrylsäure und ihrer einfachen, vorzugsweise mit C₁-₄-Alkanolen gebildeten, Ester (INCI Acrylates Copolymer), zu denen etwa die Copolymere von Methacrylsäure, Butylacrylat und Methylmethacrylat (CAS-Bezeichnung gemäß Chemical Abstracts Service: 25035-69-2) oder von Butylacrylat und Methylmethacrylat (CAS 25852-37-3) gehören und die beispielsweise von der Firma Rohm & Haas unter den Handelsnamen Aculyn® und Acusol® sowie von der Firma Degussa (Goldschmidt) unter dem Handelsnamen Tego® Polymer erhältlich sind, z. B. die anionischen nicht-assoziativen Polymere Aculyn® 22, Aculyn® 28, Aculyn® 33 (vernetzt), Acusol® 810, Acusol® 823 und Acusol® 830 (CAS 25852-37-3);
(ii) vernetzte hochmolekulare Acrylsäurecopolymere, zu denen etwa die mit einem Allylether der Saccharose oder des Pentaerythrits vernetzten Copolymere von C₁₀₋₃₀-Alkylacrylaten mit einem oder mehreren Monomeren aus der Gruppe der Acrylsäure, Methacrylsäure und ihrer einfachen, vorzugsweise mit C₁-C₄-Alkanolen gebildeten, Ester (INCI Acrylates/C₁₀-C₃₀ Alkyl Acrylate Crosspolymer) gehören und die beispielsweise von der Firma BFGoodrich unter dem Handelsnamen Carbopol® erhältlich sind, z. B. das hydrophobierte Carbopol® ETD 2623 und Carbopol® 1382 (INCI Acrylates/C₁₀₋₃₀ Alkyl Acrylate Grosspolymer) sowie Carbopol® AQUA 30 (früher Carbopol® EX 473).

Weitere Verdickungsmittel sind die Polysaccharide und Heteropolysaccharide, insbesondere die Polysaccharidgummen, beispielsweise Gummi arabicum, Agar, Alginate, Carrageene und ihre Salze, Guar, Guaran, Traganth, Gellan, Ramsan, Dextran oder Xanthan und ihre Derivate, z. B. propoxyliertes Guar, sowie ihre Mischungen. Andere Polysaccharidverdicker, wie Stärken oder Cellulosederivate, können alternativ, vorzugsweise aber zusätzlich zu einem Polysaccharidgummi eingesetzt werden, beispielsweise Stärken verschiedensten Ursprungs und Stärkederivate, z. B. Hydroxyethylstärke, Stärkephosphatester oder Stärkeacetate, oder Carboxymethylcellulose bzw. ihr Natriumsalz, Methyl-, Ethyl-, Hydroxyethyl-, Hydroxypropyl-, Hydroxypropylmethyl- oder Hydroxyethylmethylcellulose oder Celluloseacetat.

Ein besonders bevorzugter Polysaccharidverdicker ist das mikrobielle anionische Heteropolysaccharid Xanthan Gum, das von Xanthomonas campestris und einigen anderen Spezies unter aeroben Bedingungen mit einem Molekulargewicht von 2 - 15 x 10⁶ produziert wird und beispielsweise von der Firma Kelco unter den Handelsnamen Keltrol® und Kelzan® oder auch von der Firma Rhodia unter dem Handelsnamen Rhodopol® erhältlich ist.

Als Verdickungsmittel können weiterhin Schichtsilikate eingesetzt werden. Hierzu zählen beispielsweise die unter dem Handelsnamen Laponite® erhältlichen Magnesium- oder Natrium-Magnesium-Schichtsilikate der Firma Solvay Alkali, insbesondere das Laponite® RD oder auch Laponite® RDS, sowie die Magnesiumsilikate der Firma Süd-Chemie, vor allem das Optigel® SH.

Die Menge an Viskositätsregulator, wenn sie von 0% verschieden ist, beträgt vorzugsweise bis zu 0,5 Gew.-%, besonders bevorzugt von 0,001 bis 0,3 Gew.-%, insbesondere bevorzugt von 0,01 bis 0,2 Gew.-% und außerordentlich bevorzugt von 0,01 bis 0,15 Gew.-%, jeweils bezogen auf das Gesamtgewicht der Reinigungsmittel-Zusammensetzung. Die Viskosität der Reinigungsmittel-Zusammensetzung beträgt vorzugsweise von 0,4 bis 400 m·Pas.

Weiterhin können die Reinigungsmittel-Zusammensetzungen einen oder mehrere Korrosionsinhibitoren enthalten.

Geeignete Korrosionsinhibitoren (INCI Corrosion Inhibitors) sind beispielsweise folgende gemäß INCI benannte Substanzen: Cyclohexylamine, Diammonium Phosphate, Dilithium Oxalate, Dimethylamino Methylpropanol, Dipotassium Oxalate, Dipotassium Phosphate, Disodium Phosphate, Disodium Pyrophosphate, Disodium Tetrapropenyl Succinate, Hexoxyethyl Diethylammonium, Phosphate, Nitromethane, Potassium Silicate, Sodium Aluminate, Sodium Hexametaphosphate, Sodium Metasilicate, Sodium Molybdate, Sodium Nitrite, Sodium Oxalate, Sodium Silicate, Stearamidopropyl Dimethicone, Tetrapotassium Pyrophosphate, Tetrasodium Pyrophosphate und Triisopropanolamine.

Als Duftstoffe können einzelne Riechstoffverbindungen, z. B. die synthetischen Produkte vom Typ der Ester, Ether, Aldehyde, Ketone, Alkohole und Kohlenwasserstoffe verwendet werden. Riechstoffverbindungen vom Typ der Ester sind z. B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z. B. die linearen Alkanale mit 8 bis 18 C-Atomen, Citral, Citronellal, Citronellyloxyacetaldehyd, Hydroxycitronellal, Lilial und Bourgeonal, zu den Ketonen z. B. die Ionone, alpha-Isomethylionon und Methylcedrylketon, zu den Alkoholen Anethol, Citronellol, Eugenol, Geranion, Linalol, Phenylethylalkohol und Terpineol, zu den Kohlenwasserstoffen gehören hauptsächlich die Terpene und Balsame. Bevorzugt werden Mischungen verschiedener Riechstoffe verwendet, die gemeinsam eine ansprechende Duftnote erzeugen.

Als Duftstoffe können auch natürliche Riechstoffgemische verwendet werden, wie sie aus pflanzlichen oder tierischen Quellen zugänglich sind, z. B. Pinien-, Citrus-, Jasmin-, Lilien-, Rosen-, oder Ylang-Ylang-Öl. Auch ätherische Öle geringerer Flüchtigkeit, die meist als Aromakomponenten verwendet werden, eignen sich als Parfümöle, z. B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl und Ladanumöl.

Die Menge der Duftstoffe in den Reinigungsmittel-Zusammensetzungen beträgt, wenn sie von 0% verschieden ist, vorzugsweise von 0,001 bis 2 Gew.-% und besonders bevorzugt von 0,01 bis 2 Gew.-%, jeweils bezogen auf das Gesamtgewicht der Reinigungsmittel-Zusammensetzungen.

Die in den Reinigungsmittel-Zusammensetzungen gegebenenfalls enthaltenen Farbstoffe und -pigmente, sowohl organische als auch anorganische Farbstoffe, können aus der entsprechenden Positivliste der Kosmetikverordnung bzw. der EG-Liste kosmetischer Färbemittel ausgewählt werden. Vorteilhaft eingesetzt werden auch Perlglanzpigmente, z. B. Fischsilber (Guanin/ Hypoxanthin-Mischkristalle aus Fischschuppen) und Perlmutt (vermahlene Muschelschalen), monokristalline Perlglanzpigmente wie z. B. Bismuthoxychlorid (BiOCI), Schicht-Substrat Pigmente, z. B. Glimmer/Metalloxid, silberweiße Perlglanzpigmente aus TiO₂, Interferenzpigmente (TiO₂, unterschiedliche Schichtdicke), Farbglanzpigmente (Fe₂O₃) und Kombinationspigmente (TiO₂/Fe₂O₃, TiO₂/Cr₂O₃, TiO₂/Berliner Blau, TiO₂/Carmin).

Die Menge der Farbstoffe und Pigmente in den Reinigungsmittel-Zusammensetzungen beträgt, wenn sie von 0% verschieden ist, vorzugsweise von 0,01 bis 1,0 Gew.-%, bezogen auf das Gesamtgewicht der Reinigungsmittel-Zusammensetzungen.

Der Anteil der Komponente Z7) an den Reinigungsmittel-Zusammensetzungen beträgt, wenn er von 0 % verschieden ist, vorzugsweise von 0,01 bis 10 Gew.-%, besonders bevorzugt von 0,1 bis 1 Gew.-% und insbesondere bevorzugt von 0,1 bis 0,5 Gew.-%, jeweils bezogen auf das Gesamtgewicht der Reinigungsmittel-Zusammensetzungen.

Vorzugsweise enthalten die Reinigungsmittel-Zusammensetzungen
Z1) 0,005 bis 10,00 Gew.-% der Komponente Z1),
Z2) 0,10 bis 20,00 Gew.-% der Komponente Z2),
Z3) 10,00 bis 99,8 Gew.-% der Komponente Z3),
Z4) 0 bis 10 Gew.-% der Komponente Z4),
Z5) 0 bis 10 Gew.-% der Komponente Z5),
Z6) 0 bis 10 Gew.-% der Komponente Z6), und
Z7) 0 bis 10 Gew.-% der Komponente Z7),
jeweils bezogen auf das Gesamtgewicht der Reinigungsmittel-Zusammensetzungen.

Weiterer Gegenstand der vorliegenden Erfindung sind auch die Reinigungsmittel-Zusammensetzungen, die ein oder mehrere erfindungsgemäße Copolymere enthalten.

Die erfindungsgemäßen Copolymere und die erfindungsgemäßen Reinigungsmittel-Zusammensetzungen sind in vorteilhafter Weise zur Glanzerzeugung auf harten Oberflächen, vorzugsweise auf harten Oberflächen aus Kunststoff, Keramik, Stein wie z. B. Naturstein, Porzellan, Glas, Holz, Linoleum oder Metall wie z. B. Edelstahl, geeignet.

Weiterer Gegenstand der vorliegenden Erfindung ist daher die Verwendung eines oder mehrerer erfindungsgemäßer Copolymere, vorzugsweise in einer erfindungsgemäßen Reinigungsmittel-Zusammensetzung, oder einer erfindungsgemäßen Reinigungsmittel-Zusammensetzung zur Glanzerzeugung auf harten Oberflächen, vorzugsweise auf harten Oberflächen aus Kunststoff, Keramik, Stein wie z. B. Naturstein, Porzellan, Glas, Holz, Linoleum oder Metall wie z. B. Edelstahl.

Die erfindungsgemäßen Copolymere und die erfindungsgemäßen Reinigungsmittel-Zusammensetzungen sind zudem in vorteilhafter Weise zur Hydrophilisierung von harten Oberflächen, vorzugsweise von harten Oberflächen aus Kunststoff, Keramik, Stein wie z. B. Naturstein, Porzellan, Glas, Holz, Linoleum oder Metall wie z. B. Edelstahl, geeignet.

Weiterer Gegenstand der vorliegenden Erfindung ist daher die Verwendung eines oder mehrerer erfindungsgemäßer Copolymere, vorzugsweise in einer erfindungsgemäßen Reinigungsmittel-Zusammensetzung, oder einer erfindungsgemäßen Reinigungsmittel-Zusammensetzung zur Hydrophilisierung einer harten Oberfläche, vorzugsweise einer harten Oberfläche aus Kunststoff, Keramik, Stein wie z. B. Naturstein, Porzellan, Glas, Holz, Linoleum oder Metall wie z. B. Edelstahl.

Die erfindungsgemäßen Copolymere und die erfindungsgemäßen Reinigungsmittel-Zusammensetzungen sind darüber hinaus in vorteilhafter Weise zur Erzielung eines Reparatureffektes auf harten Oberflächen, vorzugsweise auf harten Oberflächen aus Kunststoff, Keramik, Stein wie z. B. Naturstein, Porzellan, Glas, Holz, Linoleum oder Metall wie z. B. Edelstahl, geeignet.

Weiterer Gegenstand der vorliegenden Erfindung ist daher die Verwendung eines oder mehrerer erfindungsgemäßer Copolymere, vorzugsweise in einer erfindungsgemäßen Reinigungsmittel-Zusammensetzung, oder einer erfindungsgemäßen Reinigungsmittel-Zusammensetzung zur Erzielung eines Reparatureffektes auf einer harten Oberfläche, vorzugsweise auf einer harten Oberfläche aus Kunststoff, Keramik, Stein wie z. B. Naturstein, Porzellan, Glas, Holz, Linoleum oder Metall wie z. B. Edelstahl.

Die oben für die erfindungsgemäßen Copolymere angegebenen bevorzugten Ausführungsformen gelten auch in entsprechender Weise für die erfindungsgemäßen Reinigungsmittel-Zusammensetzungen und für die erfindungsgemäße Verwendung der erfindungsgemäßen Copolymere oder der erfindungsgemäßen Reinigungsmittel-Zusammensetzungen, insbesondere zur Glanzerzeugung auf harten Oberflächen, zur Hydrophilisierung von harten Oberflächen und zur Erzielung eines Reparatureffektes auf harten Oberflächen.

Die Erfindung wird im Folgenden durch Beispiele näher erläutert ohne sie darauf einzuschränken. Sofern nicht explizit in den Beispielen anders angegeben, sind die Prozentangaben in den Beispielen als Gewichtsprozent (Gew.-%) zu verstehen.

### Beispiele

Es werden folgende Abkürzungen verwendet:

| | |
|---|---|
| AAPTAC | [3-(Acryloylamino)-propyl]-trimethylammoniumchlorid |
| | (75 Gew.-% aktiv in wässriger Lösung) |
| DADMAC | Diallyldimethylammoniumchlorid |
| | (65 Gew.-% aktiv in wässriger Lösung) |
| DMAA | N,N-Dimethylacrylamid |
| | (100 % aktiv) |
| MAPTAC | [3-(Methacryloylamino)-propyl]-trimethylammoniumchlorid |
| | (50 Gew.-% aktiv in wässriger Lösung) |
| MESNA | 2-Mercaptoethansulfonat-Natrium |
| | (100 % aktiv) |
| Meth 5000 | Polyethylenglykol-co-polypropylenglykol-methacrylat 5000 g/mol, 4-5 Propylenglykol-Einheiten |
| | (50 Gew.-% aktiv in wässriger Lösung) |
| MS-Na-Salz | Maleinsäure, Na-Salz |
| | (100 % aktiv) |
| NIPAM | N-Isopropylacrylamid |
| | (100 % aktiv) |
| NVP | N-Vinylpyrrolidon |
| | (100 % aktiv) |
| VA-44 | 2,2'-Azobis[2-(2-imidazolin-2-yl)propan]dihydrochlorid |
| | (100 % aktiv) |
| V-PEG 5000 | Polyethylenglykol-vinyloxy-butylether 5000 g/mol |
| | (100 % aktiv) |

### Herstellung der erfindungsgemäßen Copolymere

Allgemeine Vorschrift zur Herstellung der erfindungsgemäßen Copolymere: In einem Mehrhalskolben bestückt mit einem KPG-Rührer, Rückflusskühler und N₂-Anschluss werden unter Stickstoff (5 Liter/Stunde) für die in Tabelle 1 angegebenen Beispiele zur Herstellung von erfindungsgemäßen Copolymeren die angegebenen Mengen an Chemikalien (den Initiator ausgenommen) in der angegebenen Menge destilliertem Wasser gelöst. Es ist zu beachten, dass einige der zur Herstellung der erfindungsgemäßen Copolymere verwendeten Substanzen in wässriger Form eingesetzt werden (siehe die Angaben zu den für die Herstellung der erfindungsgemäßen Copolymere verwendeten Substanzen). Das in der Tabelle 1 angegebene destillierte Wasser wird zusätzlich zu dem über diese Substanzen eingebrachten Wasser zugegeben. Im Falle von sauren Monomeren werden diese mit Base wie z. B. Alkalicarbonat, beispielsweise Kaliumcarbonat, vorneutralisiert. Anschließend wird die wässrige Lösung für 30 Minuten mit Stickstoff gespült und auf 60 °C erhitzt. Im nächsten Schritt wird die in Tabelle 1 angegebene Menge an Initiator (VA-44) in 10 g destilliertem Wasser gelöst und über einen Zeitraum von 90 Minuten hinzu dosiert. Nach beendeter Dosierung wird für eine weitere Stunde bei einer Innentemperatur von 60 °C nachgerührt. Durch eine anschließende Analyse des Feststoffes wird der Umsatz der Reaktion geprüft und eventuell nicht umgesetzte Monomere gegebenenfalls durch geringe Zugabe einer 10 Gew.-%igen wässrigen Lösung des vorher schon eingesetzten Initiators zur Reaktion gebracht, bis ein vollständiger Umsatz erreicht ist. Danach wird das Reaktionsgemisch auf Raumtemperatur (20 - 23 °C) abgekühlt.

In Tabelle 1 sind Synthesebeispiele für erfindungsgemäße Copolymere aufgeführt.

**Tabelle 1 Zur Herstellung der Copolymere verwendete Substanzen**

| Copolymer Nr. | V-PEG 5000 [mmol] | Meth 5000 [mmol] | AAPTAC [mmol] | NIPAM [mmol] | DMAA [mmol] | DADMAC [mmol] | MAPTAC [mmol] | NVP [mmol] | MS-Na-Salz [mmol] | Na-Hypophosphit [g] | MESNA [g] | VA-44 [g] | dest. H₂O [g] | Mw [g/mol] |
|---|---|---|---|---|---|---|---|---|---|---|---|---|---|---|
| 1 | 4,816 | - | 32,985 | 80,064 | - | - | - | - | - | 0,120 | - | 1,560 | 149,450 | 39284 |
| 2 | 4,816 | - | 32,985 | - | 91,395 | - | - | - | - | 0,120 | - | 1,560 | 149,450 | |
| 3 | 4,816 | - | - | - | 22,899 | 83,755 | - | - | - | - | - | 1,560 | 142,250 | |
| 6 | 4,816 | - | - | - | 57,198 | - | 46,163 | - | - | - | - | 1,560 | 139,500 | |
| 7 | 4,816 | - | - | 80,064 | - | - | 30,760 | - | - | 0,120 | - | 1,560 | 144,860 | 35849 |
| 11 | 4,816 | - | - | 80,064 | - | - | 30,760 | - | - | - | - | 1,560 | 724,300 | 118920 |
| 16 | - | 6,875 | 15,146 | 69,017 | - | - | - | 154,580 | - | - | 0,540 | 1,560 | 142,100 | |
| 18 | - | 6,874 | 30,328 | 55,232 | - | - | - | 140,543 | - | - | 0,540 | 1,560 | 141,060 | |
| 19 | - | 4,816 | - | 80,064 | - | 42,015 | - | - | - | - | 0,180 | 1,560 | 99,070 | |
| 20 | - | 4,816 | - | 80,064 | - | 42,015 | - | - | - | - | 0,360 | 1,560 | 99,070 | |
| 21 | - | 4,816 | - | 80,064 | - | 42,015 | - | - | - | - | 0,540 | 1,560 | 99,070 | |
| 22 | 4,816 | - | - | - | 91,395 | - | 30,760 | - | - | 0,120 | - | 1,560 | 149,450 | |
| 23 | 4,816 | - | - | - | 91,395 | - | 30,760 | - | 1,090 | - | - | 1,560 | 149,450 | |

| | | | | | | | | | | | | | | |
|---|---|---|---|---|---|---|---|---|---|---|---|---|---|---|
| Die in Tabelle 1 angegebenen Mengen sind auf den Aktivstoff bezogen | | | | | | | | | | | | | | |

**Tabelle 1a: Relative Mengen gemäß Tabelle 1**

| Copolymer Nr. | Gesamtmenge der eingesetzten Monomere [mmol] | Struktur - einheiten (A) [Mol-%] | Struktur - einheiten (B) [Mol-%] | Struktur - einheiten (C) [Mol-%] | Struktur - einheiten (D) [Mol-%] |
|---|---|---|---|---|---|
| 1 | 117,865 | 28,0 | 4,1 | 67,9 | - |
| 2 | 129,196 | 25,5 | 3,7 | 70,7 | - |
| 3 | 111,470 | 75,1 | 4,3 | 20,5 | - |
| 6 | 108,177 | 42,7 | 4,5 | 52,9 | - |
| 7 | 115,640 | 26,6 | 4,2 | 69,2 | - |
| 11 | 115,640 | 26,6 | 4,2 | 69,2 | - |
| 16 | 245,618 | 6,2 | 2,8 | 91,0 | - |
| 18 | 232,977 | 13,0 | 3,0 | 84,0 | - |
| 19 | 126,895 | 33,1 | 3,8 | 63,1 | - |
| 20 | 126,895 | 33,1 | 3,8 | 63,1 | - |
| 21 | 126,895 | 33,1 | 3,8 | 63,1 | - |
| 22 | 126,971 | 24,2 | 3,8 | 72,0 | - |
| 23 | 128,061 | 24,0 | 3,8 | 71,4 | 0,9 |

Bestimmung der gewichtsmittleren Molekulargewichte Mw per GPC:

**Methodenbeschreibung:**

| | |
|---|---|
| Säule: | PSS NOVEMA MAX Guard, 1x30Å & 2x1000Å 10 µm, 300 mm x 8 mm |
| Detektor: | RI |
| Ofentemperatur: | 25 °C |
| Durchfluss: | 1 ml/ Minute |
| Injektionsvolumen: | 50 µl |
| Eluent: | 79,7 Vol-% 0,1 M NaCl + 0,3 Vol-% TFA (Trifluoressigsäure) + 20,0 Vol-% ACN (Acetonitril) |
| Kalibrationsmethode: | konventionelle Kalibration |
| Standards: | Poly(2-vinylpyridin) im Bereich von 1110 bis 1 060 000 Dalton |

Gemessene gewichtsmittlere Molekulargewichte M_{w} für erfindungsgemäße Copolymere sind in Tabelle 1 angegeben.

### Glanzvermögen

Schwarze, glänzende Keramikfliesen (10 x 10 cm) werden vorgereinigt und dann werden ca. 10 Tropfen der Reinigungsmittel-Zusammensetzung mittig auf die Fliesen aufgebracht. Die Reinigungsmittel-Zusammensetzung wird gleichmäßig mit Hilfe eines gefalteten Zellulose-Küchentuchs auf der Fliese verteilt. Nachdem die Fliesen mindestens 30 Minuten vertikal getrocknet sind, erfolgt eine visuelle Bewertung (Note 1 - 10) der Fliesen, wobei 1 als beste und 10 als schlechteste Note anzusehen ist.

Es wurden Beispielformulierungen mit und ohne erfindungsgemäßem Copolymer hergestellt und Glanztests mit diesen Formulierungen durchgeführt. Die Beispielformulierungen und Glanzergebnisse sind in Tabelle 2 dargestellt.

**Tabelle 2 Beispielformulierungen und Glanzergebnisse**

| Reiniger | A | B | C | D | E | F | G | H |
|---|---|---|---|---|---|---|---|---|
| C11-Alkoholethoxylat [Gew%] | 4,0 | 2,5 | 4,5 | 4,0 | 2,5 | 4,5 | 1,0 | - |
| Propylenglykol butylether [Gew.-%] | 1,0 | 0,6 | 0,5 | 1,0 | 0,6 | 0,5 | - | - |
| Alkylpolyglucosid [Gew.-%] | - | 1,0 | - | - | 1,0 | - | - | - |
| Natriumalkylbenzolsulfonat [Gew.-%] | - | - | - | - | - | - | 2,0 | 0,5 |
| Milchsäure [Gew.-%] | - | - | - | - | - | - | 1,5 | - |
| Dipropylenglykolmonobutylether [Gew.-%] | - | - | - | - | - | - | - | 0,25 |
| Ammoniumhydroxid [Gew.-%] | - | - | - | - | - | - | - | 0,3 |
| Benzalkoniumchlorid [Gew.-%] | - | 0,4 | - | - | 0,4 | - | - | - |
| Isopropanol [Gew.-%] | - | - | - | - | - | - | - | 7,0 |
| Wasser [Gew.-%] | ad 100 | ad 100 | ad 100 | ad 100 | ad 100 | ad 100 | ad 100 | ad 100 |
| pH (mit NaOH oder Zitronensäure eingestellt) | 7 | 7 | 7 | 10 | 10 | 10 | 3,4 | 11,3 |
| Visuelle Bewertung | | | | | | | | |
| Ohne Additiv | 6,3 | 2,5 | 10,0 | 9,2 | 3,0 | 10,0 | 10,0 | 7,0 |
| + 0,2 Gew.-% Copolymer 1 | 2,0 | 2,0 | 2,0 | 1,7 | 2,0 | 2,0 | | |
| + 0,2 Gew.-% Copolymer 2 | 2,0 | | | 2,7 | | | | |
| + 0,2 Gew.-% Copolymer 3 | 3,3 | | | 2,3 | | | | 1,3 |
| + 0,2 Gew.-% Copolymer 6 | | | | | | | 3,7 | 2,0 |

Die Ergebnisse der Tabelle 2 zeigen, dass sich durch den Einsatz der erfindungsgemäßen Copolymere in den Beispielformulierungen bessere Glanzergebnisse erzielen lassen im Vergleich zu den entsprechenden Beispielformulierungen ohne erfindungsgemäßes Copolymer.

Es wurden Marktreiniger mit erfindungsgemäßen Copolymeren versetzt und Glanztests mit den Marktreinigern mit und ohne Copolymer durchgeführt. Die Ergebnisse sind in Tabelle 3 dargestellt.

**Tabelle 3 Einsatz von Copolymeren in Marktreinigern**

| Reiniger | Marktreiniger 1 Spray-Allzweckreiniger | Marktreiniger 2 Spray-Badreiniger | Marktreiniger 3 Spray-Reiniger |
|---|---|---|---|
| pH | 11 | 2,9 | 2,5 |
| Ohne Additiv | 10 | 6,3 | 5,3 |
| + 0,2 Gew.-% Copolymer 6 | 2,0 | 1,0 | 1,0 |
| + 0,2 Gew.-% Copolymer 3 | 2,0 | 1,0 | 2,7 |

Tabelle 3 zeigt, dass sich durch den Einsatz der erfindungsgemäßen Copolymere in Marktreinigern bessere Glanzergebnisse erzielen lassen im Vergleich zu den entsprechenden Marktreinigern ohne Zusatz eines erfindungsgemäßen Copolymers.

### Adsoprtionsversuche an harten Oberflächen

Die Versuche erfolgten mit der Quarzkristall-Mikrowaage QCM-D (Englisch "Quartz Microbalance with Dissipation Monitoring", Q-Sense, Västra Frölinda, Schweden). Das Verfahren basiert auf der Eigenfrequenzänderung eines piezoelektrischen Quarzkristalls, sobald dieser mit einer Masse beladen wird. Die Oberfläche des Quarzes kann durch Spin-Coating oder Bedampfen modifiziert sein. Der Schwingquarz befindet sich in einer Messzelle. Als Messzelle dient eine Durchflusszelle, in die aus Vorlagengefäßen die zu untersuchende Lösung gepumpt wird. Die Pumpgeschwindigkeit wird während der Messzeit konstant gehalten. Typische Pumpgeschwindigkeiten liegen zwischen 50 - 250 µl/Minute. Es ist während einer Messung darauf zu achten, dass die Schläuche und Messzelle frei von Luftblasen sind. Jede Messung beginnt mit der Aufnahme der Basislinie, bezüglich derer alle Frequenz- und Dissipationsmesswerte als Nullpunkt gesetzt werden.
In diesem Beispiel wurden kommerziell erhältliche Schwingquarzkristalle mit einer 50 nm dicken Siliziumdioxid Beschichtung (QSX303, Q-Sense, Västra Frölinda, Schweden) und Schwingquarzkristalle mit einer 50 nm dicken Edelstahl (SS2343) Beschichtung (QSX304 Q-Sense, Västra Frölinda, Schweden) verwendet.

Es wurden wässrige Lösungen der erfindungsgemäßen Copolymere mit einem Aktivgehalt von 2000 ppm untersucht. Als Wasser wurde Leitungswasser mit 20° dH verwendet. Der pH Wert wurde mit NaOH oder Zitronensäure auf pH 10 eingestellt.

**Tabelle 4 Adsorption der Copolymere an Silika**

| Copolymer Nr. | Adsorbierte Masse [ng/cm²] |
|---|---|
| 6 | 355,8 |
| 3 | 142,5 |
| 7 | 348,0 |
| 22 | 102,7 |
| 23 | 330,4 |

**Tabelle 5 Adsorption der Copolymere an Edelstahl**

| Copolymer Nr. | Adsorbierte Masse [ng/cm²] |
|---|---|
| 22 | 121,0 |
| 23 | 156,6 |

Die Ergebnisse der Tabellen 4 und 5 zeigen, dass die erfindungsgemäßen Copolymere für die Anwendung auf harten Oberflächen geeignet sind, da diese auf den untersuchten anorganischen Oberflächen adsorbieren.

### Kontaktwinkeltest

Die Kontaktwinkel wurden auf verschiedenen Oberflächen (Keramik, Glas, Edelstahl) gemessen, indem die Oberflächen nach folgender Methode modifiziert wurden: Die Oberflächen wurden drei Mal für 2 Minuten in frisches vollentsalztes Wasser (VE-Wasser) getaucht und anschließend zur Modifizierung für 20 Minuten bei Raumtemperatur unter Rühren in die jeweilige wässrige Copolymerlösung getaucht. Danach wurden die Oberflächen mit einem sanften Stickstoffstrom getrocknet. Auf den so präparierten Oberflächen wurde der Kontaktwinkel mit VE Wasser gemessen (Apparatur: Tropfenanalysator der Firma Krüss, Hamburg, Model DSA 100).

Die Höhe des Kontaktwinkels von einem Wassertropfen auf einer Oberfläche ist ein Maß für deren Hydrophilisierung. Eine sehr hydrophile Oberfläche wird vollständig von einem Wassertropfen benetzt. Dieses Phänomen wird auch als Spreiten des Tropfens bezeichnet.

Es wurden erfindungsgemäße Copolymere als wässrige Lösung mit einem Aktivgehalt von 2000 ppm untersucht. Als Wasser wurde Leitungswasser mit 20° dH verwendet. Der pH Wert wurde mit NaOH oder Zitronensäure auf pH 10 eingestellt.

**Tabelle 6 Kontaktwinkel auf schwarzer Keramikfliese**

| Copolymer Nr. | Kontaktwinkel von Wasser |
|---|---|
| Unbehandelt | 18° |
| 6 | 4,2° |
| 3 | 15° |
| 7 | 5° |
| 22 | Tropfen spreitet |
| 23 | Tropfen spreitet |

**Tabelle 7 Kontaktwinkel auf Glas**

| Copolymer Nr. | Kontaktwinkel von Wasser |
|---|---|
| Unbehandelt | 39° |
| 6 | Tropfen spreitet |
| 3 | Tropfen spreitet |
| 7 | Tropfen spreitet |

**Tabelle 8 Kontaktwinkel auf Stahl**

| Copolymer Nr. | Kontaktwinkel von Wasser |
|---|---|
| unbehandelt | 15° |
| 22 | 8° |
| 23 | 13° |

Die Ergebnisse der Tabellen 6, 7 und 8 zeigen, dass die erfindungsgemäßen Copolymere geeignet sind, den Kontaktwinkel von Wasser auf anorganischen Oberflächen zu verringern (d. h. anorganische Oberflächen zu hydrophilisieren).

### Reparatureffekt

Von der Oberfläche einer beschädigten schwarzen Fliese wurden vor und nach dem Behandeln mit wässrigen Lösungen der erfindungsgemäßen Copolymere mit einem Aktivgehalt von 2000 ppm die Topographie bestimmt (Apparatur: Kontaktfreie optische 3D Oberflächencharakterisierung der Firma Sensofar, Barcelona, Model S neox). Mit Hilfe der Software MountainsMap (Digital Surf SARL, Besancon, France) können durch Segmentierung der Topografie einer Oberfläche in Flächenelemente verschiedene 3D-Kenngrößen berechnet werden. Diese Kenngrößen liefern Aussagen u.a. über Höheninformationen (Berechnung erfolgt nach ISO 25178) und Rauigkeiten (Berechnung erfolgt nach ISO 4287).

**Tabelle 9 Rauigkeit einer schwarzen beschädigten Fliese vor und nach Copolymerbehandlung**

| Copolymer Nr. | Rauigkeit unbehandelt [nm] | Rauigkeit nach Behandlung [nm] |
|---|---|---|
| 6 | 140 | 94,6 |
| 3 | 110 | 108 |
| 7 | 86 | 85 |

| | | |
|---|---|---|
| * Änderung der Rauigkeit einer schwarzen Fliese | | |

Die Untersuchungen zeigen deutlich den Reparatureffekt der erfindungsgemäßen Copolymere.

## Patentansprüche

1. Copolymer enthaltend
a) 0,1 bis 99,4 Mol-%, vorzugsweise 15,0 bis 84,5 Mol-% und besonders bevorzugt 23,0 bis 79,0 Mol-%, einer oder mehrerer kationischer Struktureinheiten (A),
b) 0,4 bis 4,5 Mol-%, vorzugsweise 0,5 bis 4,4 Mol-% und besonders bevorzugt 1,0 bis 4,4 Mol-%, einer oder mehrerer makromonomerer Struktureinheiten (B) und
c) eine oder mehrere Struktureinheiten (C), die sich von den Struktureinheiten (A) und (B) unterscheiden, vorzugsweise 0,1 bis 99,4 Mol-%, besonders bevorzugt 15,0 bis 84,5 Mol-% und insbesondere bevorzugt 20,0 bis 74,0 Mol-%, der einen oder der mehreren Struktureinheiten (C),
wobei die eine oder mehreren Struktureinheiten (A) durch die folgenden allgemeinen Formeln (I) und/oder (II) repräsentiert werden: 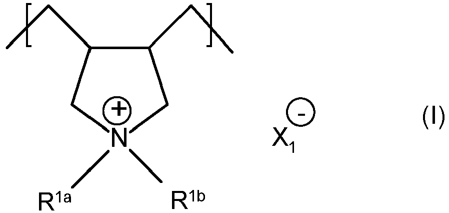 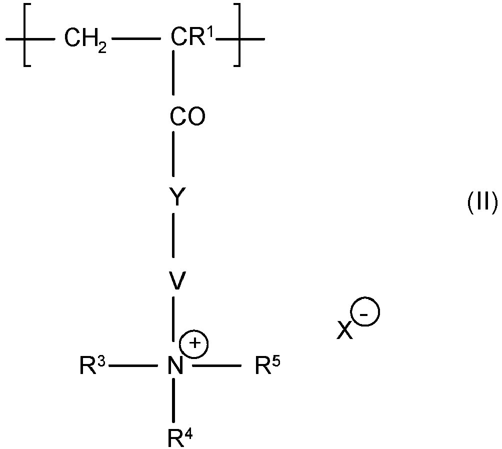 worin
R¹ und R^{1a} jeweils gleich oder verschieden sind und unabhängig voneinander jeweils für Wasserstoff und/oder einen Methylrest stehen,
R^{1b}, R³, R⁴ und R⁵ jeweils gleich oder verschieden sind und unabhängig voneinander jeweils durch Wasserstoff, einen aliphatischen Kohlenwasserstoffrest mit 1 bis 20, vorzugsweise 1 bis 4, C-Atomen, einen cycloaliphatischen Kohlenwasserstoffrest mit 5 bis 20, vorzugsweise 5 bis 8, C-Atomen, einen Arylrest mit 6 bis 14 C-Atomen und/oder Polyethylenglykol (PEG) repräsentiert werden, vorzugsweise jeweils gleich oder verschieden sind und unabhängig voneinander jeweils durch Wasserstoff und/oder Methyl repräsentiert werden und besonders bevorzugt jeweils Methyl bedeuten,
Y gleich oder verschieden ist und durch Sauerstoff, NH und/oder NR³ repräsentiert wird,
V gleich oder verschieden ist und durch -(CH₂)ₓ-, 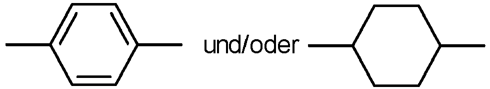 repräsentiert wird,
x gleich oder verschieden ist und durch eine ganze Zahl von 1 bis 6 repräsentiert wird,
X und X₁ jeweils gleich oder verschieden sind und unabhängig voneinander jeweils durch ein Halogenatom, C₁- bis C₄-Alkylsulfat und/oder C₁- bis C₄-Alkylsulfonat repräsentiert werden,
die eine oder die mehreren makromonomeren Struktureinheiten (B) durch die allgemeine Formel (III) repräsentiert werden: 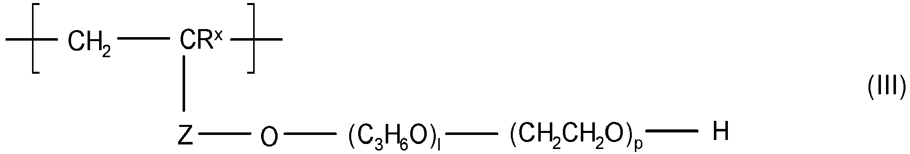 worin
R^{x} gleich oder verschieden ist und durch H und/oder Methyl repräsentiert wird,
Z gleich oder verschieden ist und durch C=O und/oder O(CH₂)₄ repräsentiert wird und vorzugsweise O(CH₂)₄ ist,
I im molaren Mittel, eine Zahl von 0 bis 7 und vorzugsweise von 0 bis 6 ist, und
p im molaren Mittel, eine Zahl von 1 bis 150, vorzugsweise von 11 bis 150 und besonders bevorzugt von 12 bis 150 ist,
wobei, wenn Z C=O bedeutet,
R^{x} gleich oder verschieden ist und durch H und/oder Methyl repräsentiert wird, I, im molaren Mittel, eine Zahl von 1 bis 7, vorzugsweise von 2 bis 6 und besonders bevorzugt von 3 bis 6 ist, und p, im molaren Mittel, eine Zahl von 1 bis 150, vorzugsweise von 11 bis 150 und besonders bevorzugt von 12 bis 150 ist,
und die eine oder die mehreren Struktureinheiten (C) das Polymerisationsprodukt mindestens einer Monomerspezies ausgewählt aus der Gruppe bestehend aus nicht-kationischen Acrylamiden, nicht-kationischen Methacrylamiden und N-Vinyl-substituierten Lactamen mit 5 bis 7 Ringatomen darstellen.

2. Copolymer nach Anspruch 1, **dadurch gekennzeichnet, dass** die eine oder die mehreren Struktureinheiten (A) das Polymerisationsprodukt mindestens einer Monomerspezies ausgewählt aus der Gruppe bestehend aus [2-(Acryloyloxy)-ethyl]-trimethylammoniumchlorid, [2-(Acryloylamino)-ethyl]-trimethylammoniumchlorid, [2-(Acryloyloxy)-ethyl]-trimethylammoniummethosulfat, [2-(Methacryloyloxy)-ethyl]-trimethylammonium-chlorid bzw. -methosulfat, [3-(Acryloylamino)-propyl]-trimethylammoniumchlorid, [3-(Methacryloylamino)-propyl]-trimethylammoniumchlorid und Diallyldimethylammoniumchlorid (DADMAC) darstellen, vorzugsweise ausgewählt aus der Gruppe bestehend aus [3-(Acryloylamino)-propyl]-trimethylammoniumchlorid, [3-(Methacryloylamino)-propyl]-trimethylammoniumchlorid und Diallyldimethylammoniumchlorid darstellen und besonders bevorzugt ausgewählt aus der Gruppe bestehend aus [3-(Methacryloylamino)-propyl]-trimethylammoniumchlorid und Diallyldimethylammoniumchlorid, darstellen.

3. Copolymer nach Anspruch 1 oder 2, **dadurch gekennzeichnet, dass** die eine oder die mehreren makromonomeren Struktureinheiten (B) der Formel (III) das Polymerisationsprodukt mindestens einer Monomerspezies ausgewählt aus der Gruppe bestehend aus Polyethylenglykol-vinyloxy-butylether, Polyethylenglykolco-polypropylenglykol-vinyloxybutylether, worin
I, im molaren Mittel, eine Zahl von 1 bis 7, vorzugsweise von 2 bis 6 und besonders bevorzugt von 3 bis 6, bedeutet,
und Polyethylenglykol-co-polypropylenglykol-(meth)acrylat, worin I, im molaren Mittel, eine Zahl von 1 bis 7, vorzugsweise von 2 bis 6 und besonders bevorzugt von 3 bis 6, bedeutet, darstellen.

4. Copolymer gemäß einem oder mehreren der Ansprüche 1 bis 3, **dadurch gekennzeichnet, dass** in der einen oder den mehreren makromonomeren Struktureinheiten der Formel (III) R^{x} H ist, I = 0 ist und p, im molaren Mittel, eine Zahl von 1 bis 150, vorzugsweise von 11 bis 150 und besonders bevorzugt von 12 bis 150 ist, wenn Z O(CH₂)₄ bedeutet.

5. Copolymer gemäß einem oder mehreren der Ansprüche 1 bis 4, **dadurch gekennzeichnet, dass** es die eine oder die mehreren kationischen Struktureinheiten (A) in Anteilen von 23,0 bis 79,0 Mol-%, die eine oder die mehreren makromonomeren Struktureinheiten (B) in Anteilen von 0,4 bis 4,4 Mol-%, vorzugsweise 0,5 bis 4,4 Mol-% und besonders bevorzugt 1,0 bis 4,4 Mol-%, und die eine oder die mehreren Struktureinheiten (C) in Anteilen von 20,0 bis 74,0 Mol-% enthält.

6. Copolymer nach einem oder mehreren der Ansprüche 1 bis 5, **dadurch gekennzeichnet, dass** die eine oder die mehreren Struktureinheiten (C) ausgewählt sind aus der Gruppe bestehend aus dem Polymerisationsprodukt mindestens eines N-Vinyl-substituierten Lactams mit 5 bis 7 Ringatomen und den Struktureinheiten der folgenden allgemeinen Formeln (IV) und/oder (V): 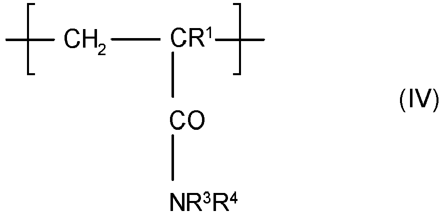 worin
R¹ gleich oder verschieden ist und Wasserstoff und/oder Methyl bedeutet, und
R³ und R⁴ jeweils gleich oder verschieden sind und unabhängig voneinander jeweils durch Wasserstoff, einen aliphatischen Kohlenwasserstoffrest mit 1 bis 20, vorzugsweise 1 bis 4, C-Atomen, einen cycloaliphatischen Kohlenwasserstoffrest mit 5 bis 20, vorzugsweise 5 bis 8, C-Atomen, einen Arylrest mit 6 bis 14 C-Atomen, einen Alkylarylrest mit 7 bis 14 C-Atomen, eine verzweigte oder unverzweigte C₁-C₅-Monohydroxyalkylgruppe und/oder Polyethylenglykol (PEG) repräsentiert werden 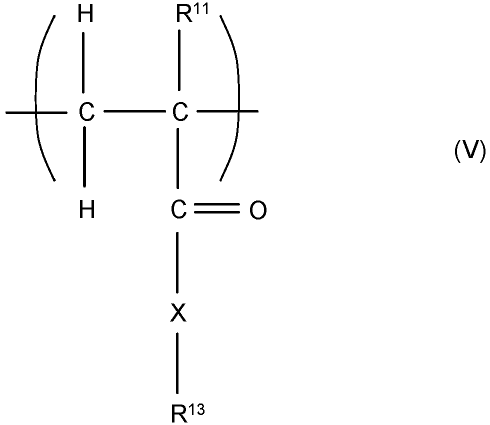
worin
R¹¹ gleich oder verschieden ist und repräsentiert wird durch H und/oder Methyl;
X gleich oder verschieden ist und repräsentiert wird durch NH-(CₙH₂ₙ) mit n = 1, 2, 3 oder 4; und
R¹³ gleich oder verschieden ist und repräsentiert wird durch OH, SO₃H, PO₃H₂, O-PO₃H₂ und/oder para-substituiertes C₆H₄-SO₃H.

7. Copolymer nach Anspruch -6, **dadurch gekennzeichnet, dass** die eine oder die mehreren Struktureinheiten (C) ausgewählt sind aus den Struktureinheiten der Formel (IV).

8. Copolymer nach einem oder mehreren der Ansprüche 1 bis 7, **dadurch gekennzeichnet, dass** die eine oder die mehreren Struktureinheiten (C) das Polymerisationsprodukt mindestens einer Monomerspezies ausgewählt aus der Gruppe bestehend aus Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-Isopropylacrylamid und N-tertiär Butylacrylamid darstellen und vorzugsweise ausgewählt aus der Gruppe bestehend aus N,N-Dimethylacrylamid und N-Isopropylacrylamid darstellen.

9. Copolymer nach einem oder mehreren der Ansprüche 1 bis 8, **dadurch gekennzeichnet, dass** es zusätzlich zu den Struktureinheiten (A), (B) und (C) eine oder mehrere Struktureinheiten (D) enthält, die sich von den Struktureinheiten (A), (B) und (C) unterscheiden, und vorzugsweise 0,1 bis 99,4 Mol-%, besonders bevorzugt 0,1 bis 40,0 Mol-% und insbesondere bevorzugt 0,1 bis 30,0 Mol-%, der einen oder mehreren Struktureinheiten (D) enthält.

10. Copolymer nach Anspruch 9, **dadurch gekennzeichnet, dass** es eine oder mehrere Struktureinheiten (D) ausgewählt aus den Struktureinheiten der folgenden allgemeinen Formeln (IX) und/oder (X) enthält: 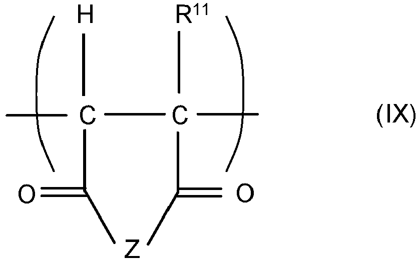 worin
R¹¹ gleich oder verschieden ist und repräsentiert wird durch H und/oder Methyl;
Z gleich oder verschieden ist und repräsentiert wird durch O und/oder NH; 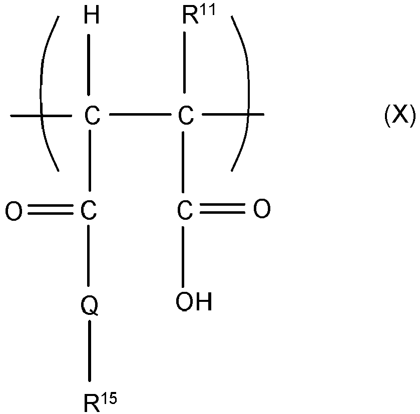
worin
R¹¹ gleich oder verschieden ist und repräsentiert wird durch H und/oder Methyl;
Q und gleich oder verschieden ist und repräsentiert wird durch O und/oder NH;
R¹⁵ gleich oder verschieden ist und repräsentiert wird durch H, (CₙH₂ₙ)-SO₃H mit n = 0, 1, 2, 3 oder 4; (CₙH₂ₙ)-OH mit n = 0, 1, 2, 3 oder 4; (CₙH₂ₙ)-PO₃H₂ mit n = 0, 1, 2, 3 oder 4; (CₙH₂ₙ)-OPO₃H₂ mit n = 0, 1, 2, 3 oder 4; (C₆H₄)-SO₃H; (C₆H₄)-PO₃H₂; (C₆H₄)-OPO₃H₂ und/oder (CₘH₂ₘ)ₑ-O-(A'O)ᵤ-R¹⁶ mit m = 0, 1, 2, 3 oder 4, e = 0, 1, 2, 3 oder 4, A' = C_{x'}H_{2x'} mit x' = 2, 3, 4 oder 5, u = eine ganze Zahl von 1 bis 350 und R¹⁶ gleich oder verschieden sowie repräsentiert durch eine unverzweigte oder verzweigte C₁-C₄-Alkylgruppe,
wobei die Struktureinheiten der Formel (X) auch in Salzform vorliegen können, vorzugsweise als NH₄⁺-, Alkali- oder Erdalkali-Salz, besonders bevorzugt als NH₄⁺- oder als Na⁺-Salz.

11. Copolymer gemäß einem oder mehreren der Ansprüche 1 bis 10, **dadurch gekennzeichnet, dass** die Struktureinheiten (A), (B), (C) und gegebenenfalls (D) in statistischer, blockförmiger, alternierender oder gradientenartiger Verteilung im Copolymer vorliegen.

12. Copolymer gemäß einem oder mehreren der Ansprüche 1 bis 11, **dadurch gekennzeichnet, dass** sein gewichtsmittleres Molekulargewicht M_{w}, bestimmt mittels GPC mit Poly(2-vinylpyridin) als Standard, von 10 000 bis 250 000 g/mol, vorzugsweise von 15 000 bis 200 000 g/mol und besonders bevorzugt von 20 000 bis 150 000 g/mol beträgt.

13. Reinigungsmittel-Zusammensetzung, **dadurch gekennzeichnet, dass** sie ein oder mehrere Copolymere gemäß einem oder mehreren der Ansprüche 1 bis 12 enthält.

14. Verwendung eines oder mehrerer Copolymere gemäß einem oder mehreren der Ansprüche 1 bis 12 oder einer Reinigungsmittel-Zusammensetzung nach Anspruch 13 zur Glanzerzeugung auf harten Oberflächen, vorzugsweise auf harten Oberflächen aus Kunststoff, Keramik, Stein wie z. B. Naturstein, Porzellan, Glas, Holz, Linoleum oder Metall wie z. B. Edelstahl.

15. Verwendung eines oder mehrerer Copolymere gemäß einem oder mehreren der Ansprüche 1 bis 12 oder einer Reinigungsmittel-Zusammensetzung nach Anspruch 13 zur Hydrophilisierung einer harten Oberfläche, vorzugsweise einer harten Oberfläche aus Kunststoff, Keramik, Stein wie z. B. Naturstein, Porzellan, Glas, Holz, Linoleum oder Metall wie z. B. Edelstahl.

16. Verwendung eines oder mehrerer Copolymere gemäß einem oder mehreren der Ansprüche 1 bis 12 oder einer Reinigungsmittel-Zusammensetzung nach Anspruch 13 zur Erzielung eines Reparatureffektes auf einer harten Oberfläche, vorzugsweise auf einer harten Oberfläche aus Kunststoff, Keramik, Stein wie z. B. Naturstein, Porzellan, Glas, Holz, Linoleum oder Metall wie z. B. Edelstahl.

## Claims

1. Copolymer containing
a) 0.1 to 99.4 mol%, preferably 15.0 to 84.5 mol% and more preferably 23.0 to 79.0 mol% of one or more cationic structural units (A),
b) 0.4 to 4.5 mol%, preferably 0.5 to 4.4 mol% and more preferably 1.0 to 4.4 mol% of one or more macromonomeric structural units (B) and
c) one or more structural units (C) other than the structural units (A) and (B), preferably 0.1 to 99.4 mol%, more preferably 15.0 to 84.5 mol% and especially preferably 20.0 to 74.0 mol% of the one or more structural units (C),
where the one or more structural units (A) is/are represented by the following general formulae (I) and/or (II) : 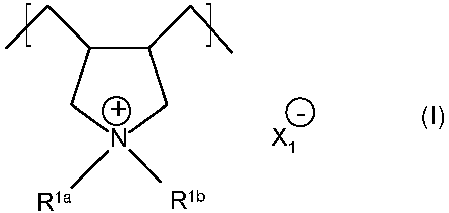 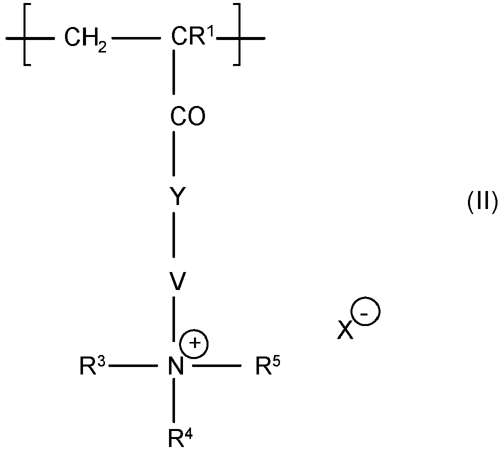 in which
R¹ and R^{1a} are each the same or different and are each independently hydrogen and/or a methyl radical, R^{1b}, R³, R⁴ and R⁵ are each the same or different and are each independently represented by hydrogen, an aliphatic hydrocarbyl radical having 1 to 20 and preferably 1 to 4 carbon atoms, a cycloaliphatic hydrocarbyl radical having 5 to 20 and preferably 5 to 8 carbon atoms, an aryl radical having 6 to 14 carbon atoms and/or polyethylene glycol (PEG), are preferably each the same or different and are each independently represented by hydrogen and/or methyl and are more preferably each methyl,
Y is the same or different and is represented by oxygen, NH and/or NR³,
V is the same or different and is represented by -(CH₂)ₓ-, 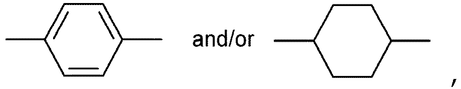
x is the same or different and is represented by an integer from 1 to 6,
X and X₁ are each the same or different and are each independently represented by a halogen atom, C₁- to C₄-alkylsulfate and/or C₁- to C₄-alkylsulfonate,
the one or more macromonomeric structural units (B) are represented by the formula (III): 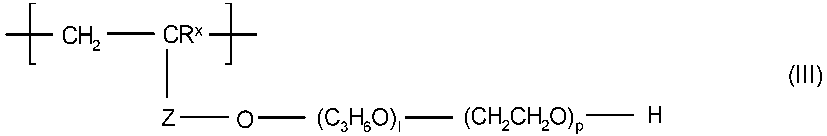
in which
R^{x} is the same or different and is represented by H and/or methyl,
Z is the same or different and is represented by C=O and/or O(CH₂)₄ and is preferably O(CH₂)₄,
1 on molar average is a number from 0 to 7 and preferably from 0 to 6, and
p on molar average is a number from 1 to 150, preferably from 11 to 150 and more preferably from 12 to 150,
where, when Z is C=O,
R^{x} is the same or different and is represented by H and/or methyl,
1 on molar average is a number from 1 qto 7, preferably from 2 to 6 and more preferably from 3 to 6, and p on molar average is a number from 1 to 150, preferably from 11 to 150 and more preferably from 12 to 150,
and the one or more structural units (C) is/are the polymerization product of at least one monomer species selected from the group consisting of noncationic acrylamides, noncationic methacrylamides and N-vinyl-substituted lactams having 5 to 7 ring atoms.

2. Copolymer according to Claim 1, **characterized in that** the one or more structural units (A) is/are the polymerization product of at least one monomer species selected from the group consisting of [2-(acryloyloxy)ethyl]trimethylammonium chloride, [2-(acryloylamino)ethyl]trimethylammonium chloride, [2-(acryloyloxy)ethyl]trimethylammonium methosulfate, [2-(methacryloyloxy)ethyl]trimethylammonium chloride or methosulfate, [3-(acryloylamino)propyl]trimethylammonium chloride, [3-(methacryloylamino)propyl]-trimethylammonium chloride and diallyldimethylammonium chloride (DADMAC), preferably selected from the group consisting of [3-(acryloylamino)propyl]trimethylammonium chloride, [3-(methacryloylamino)propyl]trimethylammonium chloride and diallyldimethylammonium chloride, and more preferably selected from the group consisting of [3-(methacryloylamino)propyl]trimethylammonium chloride and diallyldimethylammonium chloride.

3. Copolymer according to Claim 1 or 2, **characterized in that** the one or more macromonomeric structural units (B) of the formula (III) is/are the polymerization product of at least one monomer species selected from the group consisting of polyethylene glycol vinyloxybutyl ether, polyethylene glycol-co-polypropylene glycol vinyloxybutyl ether in which 1 on molar average is a number from 1 to 7, preferably from 2 to 6 and more preferably from 3 to 6, and polyethylene glycol-co-polypropylene glycol (meth)acrylate in which 1 on molar average is a number from 1 to 7, preferably from 2 to 6 and more preferably from 3 to 6.

4. Copolymer according to one or more of Claims 1 to 3, **characterized in that**, in the one or more macromonomeric structural units of the formula (III), R^{x} is H, 1 = 0 and p on molar average is a number from 1 to 150, preferably from 11 to 150 and more preferably from 12 to 150 when Z is O(CH₂)₄.

5. Copolymer according to one or more of Claims 1 to 4, **characterized in that** it contains the one or more cationic structural units (A) in proportions of 23.0 to 79.0 mol%, the one or more macromonomeric structural units (B) in proportions of 0.4 to 4.4 mol%, preferably 0.5 to 4.4 mol% and more preferably 1.0 to 4.4 mol%, and the one or more structural units (C) in proportions of 20.0 to 74.0 mol%.

6. Copolymer according to one or more of Claims 1 to 5, **characterized in that** the one or more structural units (C) is/are selected from the group consisting of the polymerization product of at least one N-vinyl-substituted lactam having 5 to 7 ring atoms and the structural units of the following general formulae (IV) and/or (V): 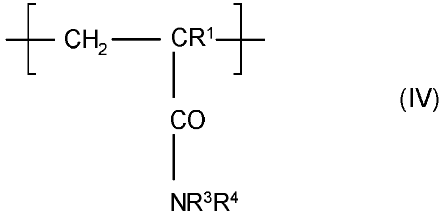 in which
R¹ is the same or different and is hydrogen and/or methyl, and
R³ and R⁴ are each the same or different and are each independently represented by hydrogen, an aliphatic hydrocarbyl radical having 1 to 20 and preferably 1 to 4 carbon atoms, a cycloaliphatic hydrocarbyl radical having 5 to 20 and preferably 5 to 8 carbon atoms, an aryl radical having 6 to 14 carbon atoms, an alkylaryl radical having 7 to 14 carbon atoms, a branched or unbranched C₁-C₅-monohydroxyalkyl group and/or polyethylene glycol (PEG), 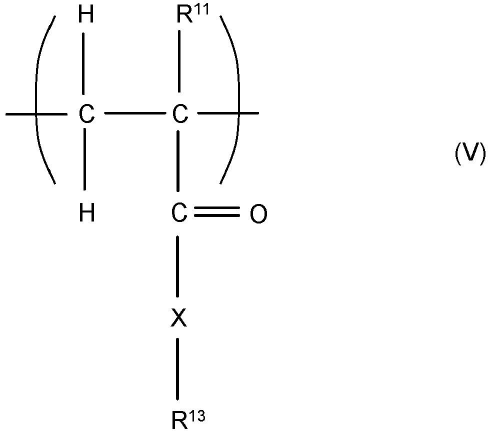
in which
R¹¹ is the same or different and is represented by H and/or methyl;
X is the same or different and is represented by NH-(CₙH₂ₙ) with n = 1, 2, 3 or 4; and
R¹³ is the same or different and is represented by OH, SO₃H, PO₃H₂, O-PO₃H₂ and/or para-substituted C₆H₄-SO₃H.

7. Copolymer according to Claim 6, **characterized in that** the one or more structural units (C) is/are selected from the structural units of the formula (IV).

8. Copolymer according to one or more of Claims 1 to 7, **characterized in that** the one or more structural units (C) is/are the polymerization product of at least one monomer species selected from the group consisting of acrylamide, methacrylamide, N-methylacrylamide, N,N-dimethylacrylamide, N-ethylacrylamide, N-cyclohexylacrylamide, N-benzylacrylamide, N-methylolacrylamide, N-isopropylacrylamide and N-tert-butylacrylamide and is/are preferably selected from the group consisting of N,N-dimethylacrylamide and N-isopropylacrylamide.

9. Copolymer according to one or more of Claims 1 to 8, **characterized in that** it contains, in addition to the structural units (A), (B) and (C), one or more structural units (D) other than the structural units (A), (B) and (C), and preferably contains 0.1 to 99.4 mol%, more preferably 0.1 to 40.0 mol% and especially preferably 0.1 to 30.0 mol% of the one or more structural units (D).

10. Copolymer according to Claim 9, **characterized in that** it contains one or more structural units (D) selected from the structural units of the following general formulae (IX) and/or (X): 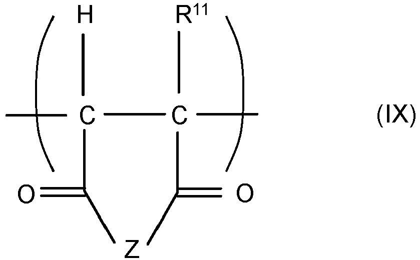 in which
R¹¹ is the same or different and is represented by H and/or methyl;
Z is the same or different and is represented by O and/or NH; 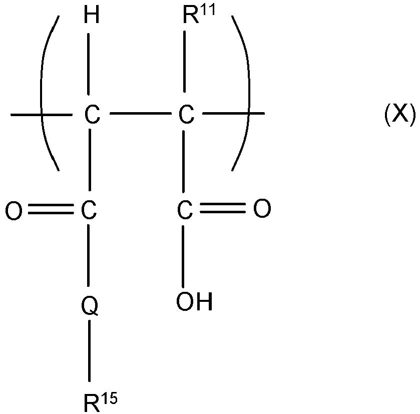
in which
R¹¹ is the same or different and is represented by H and/or methyl;
Q is the same or different and is represented by O and/or NH; and
R¹⁵ is the same or different and is represented by H, (CₙH₂ₙ)-SO₃H with n = 0, 1, 2, 3 or 4; (CₙH₂ₙ)-OH with n = 0, 1, 2, 3 or 4; (CₙH₂ₙ)-PO₃H₂ with n = 0, 1, 2, 3 or 4; (CₙH₂ₙ)-OPO₃H₂ with n = 0, 1, 2, 3 or 4; (C₆H₄)-SO₃H; (C₆H₄)-PO₃H₂; (C₆H₄)-OPO₃H₂ and/or (CₘH₂ₘ)ₑ-O-(A'O)ᵤ-R¹⁶ with m = 0, 1, 2, 3 or 4, e = 0, 1, 2, 3 or 4, A' = C_{x'}H_{2x'} with x' = 2, 3, 4 or 5, u = an integer from 1 to 350 and R¹⁶ is the same or different and is represented by an unbranched or branched C₁-C₄-alkyl group,
where the structural units of the formula (X) may also be in salt form, preferably as the NH₄⁺, alkali metal or alkaline earth metal salt, more preferably as the NH₄⁺ or Na⁺ salt.

11. Copolymer according to one or more of Claims 1 to 10, **characterized in that** the structural units (A), (B), (C) and optionally (D) are present in the copolymer in a random, blockwise, alternating or gradient distribution.

12. Copolymer according to one or more of Claims 1 to 11, **characterized in that** it has a weight-average molecular weight M_{w}, determined by GPC with poly(2-vinylpyridine) as standard, of from 10 000 to 250 000 g/mol, preferably from 15 000 to 200 000 g/mol and more preferably from 20 000 to 150 000 g/mol.

13. Detergent composition, **characterized in that** it comprises one or more copolymers according to one or more of Claims 1 to 12.

14. Use of one or more copolymers according to one or more of Claims 1 to 12 or of a detergent composition according to Claim 13 for producing shine on hard surfaces, preferably on hard surfaces of plastic, ceramic, stone, for example natural stone, porcelain, glass, wood, linoleum or metal, for example stainless steel.

15. Use of one or more copolymers according to one or more of Claims 1 to 12 or of a detergent composition according to Claim 13 for hydrophilization of a hard surface, preferably a hard surface of plastic, ceramic, stone, for example natural stone, porcelain, glass, wood, linoleum or metal, for example stainless steel.

16. Use of one or more copolymers according to one or more of Claims 1 to 12 or of a detergent composition according to Claim 13 for achieving a repair effect on a hard surface, preferably on a hard surface of plastic, ceramic, stone, for example natural stone, porcelain, glass, wood, linoleum or metal, for example stainless steel.

## Revendications

1. Copolymère contenant
a) 0,1 à 99,4% en mole, de préférence 15,0 à 84,5% en mole et de manière particulièrement préférée 23,0 à 79,0% en mole d'un ou de plusieurs motifs structuraux cationiques (A),
b) 0,4 à 4,5% en mole, de préférence 0,5 à 4,4% en mole et de manière particulièrement préférée 1,0 à 4,4% en mole d'un ou de plusieurs motifs structuraux macromonomères (B),
c) un ou plusieurs motifs structuraux (C), qui se distinguent des motifs structuraux (A) et (B), de préférence 0,1 à 99,4% en mole, de manière particulièrement préférée 15,0 à 84,5% en mole et en particulier de préférence 20,0 à 74,0% en mole, dudit un ou desdits plusieurs motifs structuraux (C),
ledit un ou lesdits plusieurs motifs structuraux (A) étant représentés par les formules générales suivantes (I) et (II) : 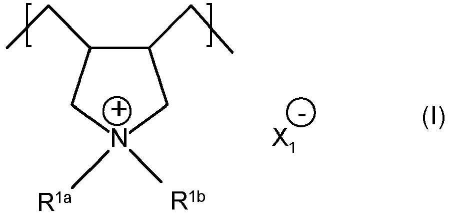 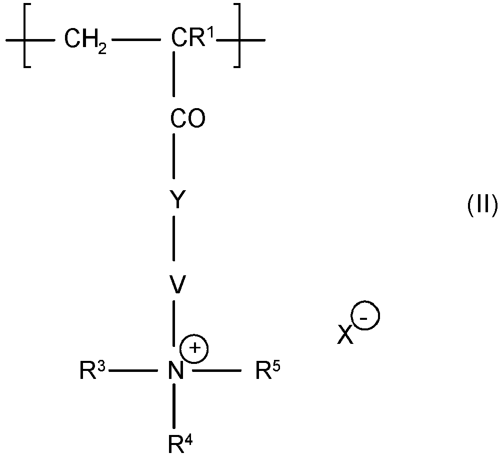 dans lesquelles
R¹ et R^{1a} sont à chaque fois identiques ou différents et représentent, indépendamment l'un de l'autre, à chaque fois hydrogène et/ou un radical méthyle, R^{1b}, R³, R⁴ et R⁵ sont à chaque fois identiques ou différents et représentent, indépendamment les uns des autres, à chaque fois hydrogène, un radical hydrocarboné aliphatique comprenant 1 à 20, de préférence 1 à 4, atomes de carbone, un radical hydrocarboné cycloaliphatique comprenant 5 à 20, de préférence 5 à 8, atomes de carbone, un radical aryle comprenant 6 à 14 atomes de carbone et/ou un polyéthylèneglycol (PEG), sont à chaque fois de préférence identiques ou différents et représentent, indépendamment les uns des autres, à chaque fois hydrogène et/ou méthyle et signifient de manière particulièrement préférée à chaque fois méthyle,
Y est identique ou différent et représente oxygène, NH et/ou NR³,
V est identique ou différent et représente -(CH₂)ₓ-, 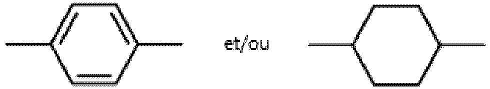
x est identique ou différent et représente un nombre entier de 1 à 6 ;
X et X₁ sont identiques ou différents et représentent, indépendamment l'un de l'autre, à chaque fois un atome d'halogène, un C₁-C₄-alkylsulfate et/ou un C₁-C₄-alkylsulfonate,
ledit un ou lesdits plusieurs motifs structuraux macromonomères (B) étant représentés par la formule générale (III) : 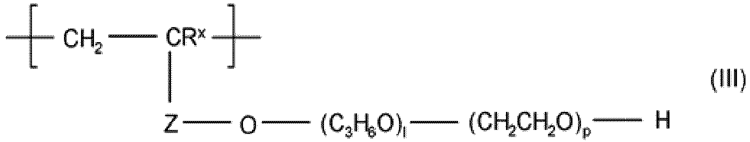
dans laquelle
R^{x} est identique ou différent et représente H et/ou méthyle,
Z est identique ou différent et représente C=O et/ou O(CH₂)₄ et représente de préférence O(CH₂)₄,
1 en moyenne molaire, représente un nombre de 0 à 7 et de préférence de 0 à 6 et
p en moyenne molaire, représente un nombre de 1 à 150, de préférence de 11 à 150 et de manière particulièrement préférée de 12 à 150,
où, lorsque Z signifie C=O,
R^{x} est identique ou différent et représente H et/ou méthyle, 1, en moyenne molaire, représente un nombre de 1 à 7, de préférence de 2 à 6 et de manière particulièrement préférée de 3 à 6 et p, en moyenne molaire, représente un nombre de 1 à 150, de préférence de 11 à 150 et de manière particulièrement préférée de 12 à 150,
et ledit un ou lesdits plusieurs motifs structuraux (C) représentant le produit de polymérisation d'au moins une espèce monomère choisie dans le groupe constitué par les acrylamides non cationiques, les méthacrylamides non cationiques et les lactame N-substitués par vinyle comprenant 5 à 7 atomes de cycle.

2. Copolymère selon la revendication 1, **caractérisé en ce que** ledit un ou lesdits plusieurs motifs structuraux (A) représentent le produit de polymérisation d'au moins une espèce monomère choisie dans le groupe constitué par le chlorure de [2-(acryloyloxy)-éthyl]-triméthylammonium, le chlorure de [2-(acryloylamino)-éthyl]-triméthylammonium, le méthosulfate de [2-(acryloyloxy)-éthyl]-triméthylammonium, le chlorure ou le méthosulfate de [2-(méthacryloyloxy)-éthyl]-triméthylammonium, le chlorure de [3-(acryloylamino)-propyl]-triméthylammonium, le chlorure de [3-(méthacryloylamino)-propyl]-triméthylammonium et le chlorure de diallyldiméthylammonium (DADMAC), de préférence choisie dans le groupe constitué par le chlorure de [3-(acryloylamino)-propyl]-triméthylammonium, le chlorure de [3-(méthacryloylamino)-propyl]-triméthylammonium et le chlorure de diallyldiméthylammonium et de manière particulièrement préférée choisie dans le groupe constitué par le chlorure de [3-(méthacryloylamino)-propyl]-triméthylammonium et le chlorure de diallyldiméthylammonium.

3. Copolymère selon la revendication 1 ou 2, **caractérisé en ce que** ledit un ou lesdits plusieurs motifs structuraux macromonomères (B) de formule (III) représentent le produit de polymérisation d'au moins une espèce monomère choisie dans le groupe constitué par le polyéthylèneglycolvinyloxybutyléther, le polyéthylèneglycol-co-polypropylèneglycolvinyloxybutyléther, où 1, en moyenne molaire, signifie un nombre de 1 à 7, de préférence de 2 à 6 et de manière particulièrement préférée de 3 à 6, et le (méth)acrylate de polyéthylèneglycol-co-polypropylèneglycol, où 1, en moyenne molaire, signifie un nombre de 1 à 7, de préférence de 2 à 6 et de manière particulièrement préférée de 3 à 6.

4. Copolymère selon l'une ou plusieurs des revendications 1 à 3, **caractérisé en ce que** dans ledit un ou lesdits plusieurs motifs structuraux macromonomères de formule (III), R^{x} représente H, 1 = 0 et p, en moyenne molaire, signifie un nombre de 1 à 150, de préférence de 11 à 150 et de manière particulièrement préférée de 12 à 150, lorsque Z signifie O(CH₂)₄.

5. Copolymère selon l'une ou plusieurs des revendications 1 à 4, **caractérisé en ce qu'**il contient ledit un ou lesdits plusieurs motifs structuraux cationiques (A) en des proportions de 23,0 à 79,0% en mole, ledit un ou lesdits plusieurs motifs structuraux macromonomères (B) en des proportions de 0,4 à 4,4% en mole, de préférence de 0,5 à 4,4% en mole et de manière particulièrement préférée de 1,0 à 4,4% en mole et ledit un ou lesdits plusieurs motifs structuraux (C) en des proportions de 20,0 à 74,0% en mole.

6. Copolymère selon l'une ou plusieurs des revendications 1 à 5, **caractérisé en ce que** ledit un ou lesdits plusieurs motifs structuraux (C) sont choisis dans le groupe constitué par le produit de polymérisation d'au moins un lactame N-substitué par vinyle comprenant 5 à 7 atomes de cycle et les motifs structuraux des formules générales suivantes (IV) et/ou (V) : 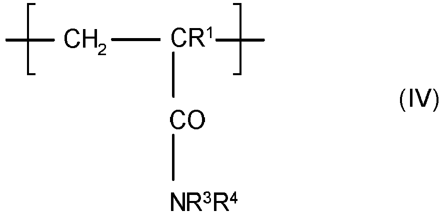 dans laquelle
R¹ est identique ou différent et représente hydrogène et/ou méthyle et
R³ et R⁴ sont à chaque fois identiques ou différents et représentent, indépendamment l'un de l'autre, à chaque fois hydrogène, un radical hydrocarboné aliphatique comprenant 1 à 20, de préférence 1 à 4, atomes de carbone, un radical hydrocarboné cycloaliphatique comprenant 5 à 20, de préférence 5 à 8, atomes de carbone, un radical aryle comprenant 6 à 14 atomes de carbone, un radical alkylaryle comprenant 7 à 14 atomes de carbone, un radical C₁-C₅-monohydroxyalkyle ramifié ou non ramifié et/ou un polyéthylèneglycol (PEG), 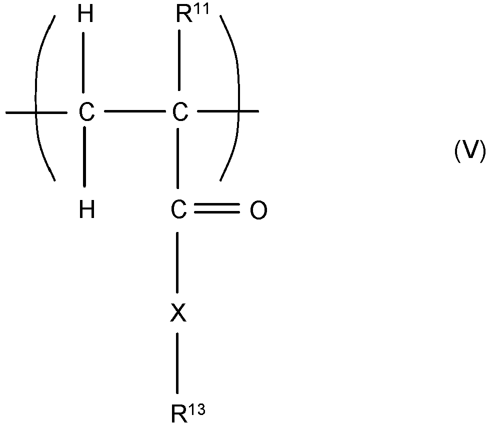
dans laquelle
R¹¹ est identique ou différent et représente H et/ou méthyle ;
X est identique ou différent et représente NH-(CₙH₂ₙ) avec n = 1, 2, 3 ou 4 ; et
R¹³ est identique ou différent et représente OH, SO₃H, PO₃H₂, O-PO₃H₂ et/ou C₆H₄-SO₃H substitué en position para.

7. Copolymère selon la revendication 6, **caractérisé en ce que** ledit un ou lesdits plusieurs motifs structuraux (C) sont choisis parmi les motifs structuraux de formule (IV) .

8. Copolymère selon l'une ou plusieurs des revendications 1 à 7, **caractérisé en ce que** ledit un ou lesdits plusieurs motifs structuraux (C) représentent le produit de polymérisation d'au moins une espèce monomère choisie dans le groupe constitué par l'acrylamide, le méthacrylamide, le N-méthylacrylamide, le N,N-diméthylacrylamide, le N-éthylacrylamide, le N-cyclohexylacrylamide, le N-benzylacrylamide, le N-méthylolacrylamide, le N-isopropylacrylamide et N-tert-butylacrylamide et de préférence choisie dans le groupe constitué par le N,N-diméthylacrylamide et le N-isopropylacrylamide.

9. Copolymère selon l'une ou plusieurs des revendications 1 à 8, **caractérisé en ce qu'**il contient en plus des motifs structuraux (A), (B) et (C), un ou plusieurs motifs structuraux(D), qui se distinguent des motifs structuraux (A), (B) et (C), et de préférence 0,1 à 99,4% en mole, de manière particulièrement préférée 0,1 à 40,0% en mole et en particulier de préférence 0,1 à 30,0% en mole, dudit un ou desdits plusieurs motifs structuraux (D).

10. Copolymère selon la revendication 9, **caractérisé en ce qu'**il contient un ou plusieurs motifs structuraux (D) choisis parmi les motifs structuraux des formules générales suivantes (IX) et/ou (X) : 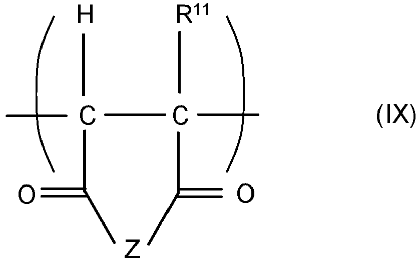 dans laquelle
R¹¹ est identique ou différent et représente H et/ou méthyle ;
Z est identique ou différent et représente O et/ou NH ; 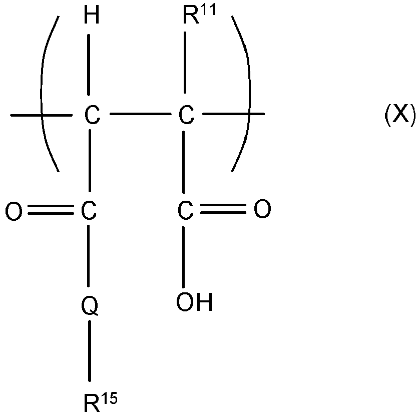
dans laquelle
R¹¹ est identique ou différent et représente H et/ou méthyle ;
Q est identique ou différent et représente O et/ou NH ; et
R¹⁵ est identique ou différent et représente H, (CₙH₂ₙ)-SO₃H avec n = 0, 1, 2, 3 ou 4 ; (CₙH₂ₙ) -OH avec n = 0, 1, 2, 3 ou 4 ; (CₙH₂ₙ)-PO₃H₂ avec n = 0, 1, 2, 3 ou 4 ; (CₙH₂ₙ)-OPO₃H₂ avec n = 0, 1, 2, 3 ou 4 ; (C₆H₄)-SO₃H ; (C₆H₄) - PO₃H₂ ; (C₆H₄)-OPO₃H₂ et/ou (CₘH₂ₘ)ₑ-O-(A'O)ᵤ-R¹⁶ avec m = 0, 1, 2, 3 ou 4, e = 0, 1, 2, 3 ou 4, A' = C_{x'}H_{2x'} avec x' = 2, 3, 4 ou 5, u = un nombre entier de 1 à 350 et R¹⁶ étant identique ou différent et représentant un groupe C₁-C₄-alkyle non ramifié ou ramifié,
les motifs structuraux de formule (X) pouvant également se trouver sous forme de sel, de préférence sous forme de sel de NH₄⁺, de métal alcalin ou de métal alcalino-terreux, de manière particulièrement préférée sous forme de sel de NH₄⁺ ou de Na⁺.

11. Copolymère selon l'une ou plusieurs des revendications 1 à 10, **caractérisé en ce que** les motifs structuraux (A), (B), (C) et le cas échéant (D) se trouvent dans une répartition statistique, séquencée, alternée ou de type gradient dans le copolymère.

12. Copolymère selon l'une ou plusieurs des revendications 1 à 11, **caractérisé en ce que** son poids moléculaire moyen en poids M_{w}, déterminé par GPC avec de la poly(2-vinylpyridine) comme étalon, est de 10.000 à 250.000 g/mole, de préférence de 15.000 à 200.000 g/mole et de manière particulièrement préférée de 20.000 à 150.000 g/mole.

13. Composition détergente, **caractérisée en ce qu'**elle contient un ou plusieurs copolymères selon l'une ou plusieurs des revendications 1 à 12.

14. Utilisation d'un ou de plusieurs copolymères selon l'une ou plusieurs des revendications 1 à 12 ou d'une composition détergente selon la revendication 13 pour la génération de brillance sur des surfaces dures, de préférence sur des surfaces dures en matériau synthétique, en céramique, en pierre, comme par exemple la pierre naturelle, en porcelaine, en verre, en bois, en linoléum ou en métal tel que par exemple l'acier inoxydable.

15. Utilisation d'un ou de plusieurs copolymères selon l'une ou plusieurs des revendications 1 à 12 ou d'une composition détergente selon la revendication 13 pour l'hydrophilisation d'une surface dure, de préférence d'une surface dure en matériau synthétique, en céramique, en pierre, comme par exemple la pierre naturelle, en porcelaine, en verre, en bois, en linoléum ou en métal tel que par exemple l'acier inoxydable.

16. Utilisation d'un ou de plusieurs copolymères selon l'une ou plusieurs des revendications 1 à 12 ou d'une composition détergente selon la revendication 13 pour obtenir un effet de réparation sur une surface dure, de préférence sur une surface dure en matériau synthétique, en céramique, en pierre, comme par exemple la pierre naturelle, en porcelaine, en verre, en bois, en linoléum ou en métal tel que par exemple l'acier inoxydable.
